# DEMANDE DE BREVET EUROPEEN

(11) **EP 0 822 498 A1**
(43) Date de publication de la demande: **04.02.1998**
(21) Numéro de dépôt: 97401493.8
(22) Date de dépôt: 26.06.1997
(51) Int. Cl.: G06F 11/30

(54) **Procédé de surveillance d'une pluralité de types d'objets d'une pluralité de noeuds à partir d'un noeud d'administration dans un système informatique**

(30) Priorité: 27.06.1996 FR 9608019
(71) Demandeur: BULL S.A., 78430 Louveciennes (FR)
(72) Inventeur: Boukobza, Marcel, 92380 Garches (FR); Sitbon, Gérard, 94400 Vitry (FR)
(74) Mandataire: Debay, Yves

(57) **Abrégé**

La présente invention concerne un procédé de surveillance d'une pluralité de types d'objets sur une pluralité de noeuds (N1, N2, ..., Nn) comprenant un noeud d'administration (MN) dans un système informatique. Ce procédé est remarquable en ce que, la surveillance est configurée puis diffusée de manière filtrée à partir du noeud d'administration (MN) vers des agents autonomes (SAA), un agent autonome étant installé sur chaque noeud à surveiller pour, en offrant une corrélation intertype, soit traiter au plus près les différents types d'objets ou ensemble d'objets d'un domaine appelé objet global défini de manière générique, soit remonter des informations à visualiser vers l'interface graphique du noeud d'administration, chaque agent comportant une pluralité de modules spécifiques (SM1, SM2, ..., SMn) propres aux différents types d'objets ou à un domaine particulier, chaque module spécifique mesurant des paramètres statiques et dynamiques, particuliers au type d'objet qu'il surveille et collectant lesdites mesures, testant des conditions sur lesdits paramètres relativement à des seuils prédéfinis et déclenchant éventuellement des actions associées auxdites conditions testées, les paramètres, les conditions et les actions étant modifiables par l'utilisateur du noeud d'administration.

## Description

La présente invention conceme un procédé de surveillance d'une pluralité de types d'objets d'une pluralité de noeuds à partir d'un noeud d'administration dans un système informatique.

De manière générale, un environnement de gestion distribuée permet d'intégrer la gestion des systèmes, des réseaux et des applications utilisateur. Les applications de gestion sont conçues de manière à avantageusement dissimuler à l'utilisateur les étapes détaillées nécessaires pour effectuer des travaux de gestion et garantir l'intégrité des informations de gestion. Ces applications gèrent des objets en utilisant des interfaces claires et concises avec les services communs de gestion. Les services communs de gestion permettent de simplifier le développement des applications de gestion. Des services "bases d'informations de gestion", appelés couramment par l'homme du métier MIB (Management Information Base), permettent aux applications de gestion de manipuler lesdites informations de gestion, ces services utilisent, de préférence, les normes applicables comme les normes OSI CMIS/CMIP (Open Systems Interconnection Common Management Information Services/Common Management Information Protocol) et Internet SNMP (Simple Network Management Protocol). Un objet géré est, dans cet environnement informatique, une représentation de ressources telles qu'une machine, un fichier, un périphérique, un utilisateur, une application, etc.. Une MIB qui est en fait un ensemble d'objets, représente les différentes ressources à administrer dans un système. Un objet d'une MIB est défini par une classe d'objets (correspondant à un type d'objet) et une instance de cette classe d'objets. Une requête est émise par une application en vue de consulter et/ou de modifier un objet de la MIB, elle est caractérisée par le type d'opération à appliquer sur un ou plusieurs des objets de la MIB. L'exploitation efficace d'un tel environnement de gestion distribuée suppose une architecture flexible qui autorise une administration aisée de différentes sortes d'objets. Plus formellement, dans un tel environnement, les systèmes informatiques qui sont construits sur des architectures réparties impliquent que les services requis par une application sont situés sur plusieurs systèmes qui communiquent entre eux, comme par exemple, les systèmes de transactionnels, les systèmes de gestion de bases de données SGDB, les systèmes d'impression, les systèmes de sécurité, les annuaires, etc.. Cette répartition ou distribution entraîne une grande souplesse d'utilisation et autorise des gains importants en performance (réseau en grappe :"cluster"), cependant, le fait de multiplier les systèmes à administrer pose un problème, car cette multiplication a également pour effet d'augmenter de manière significative la probabilité de dysfonctionnement sur au moins un système. Une solution à ce problème consiste à développer des systèmes d'administration pilotés par un gestionnaire (appelé aussi "manager" par l'homme du métier) qui contrôle et dirige tout un système par l'intermédiaire d'agents qui ont exclusivement pour objet d'une part, d'exécuter les requêtes du gestionnaire utilisant principalement des fonctions du type "get" ou "set" et d'autre part d'informer ledit gestionnaire des événements relatifs au système surveillé qui utilise une fonction du type "trap". L'utilisation du protocole SNMP et d'agents SNMP fournit un exemple courant d'une application d'une telle organisation qui, a pour principal avantage d'être simple, mais qui présente cependant de notables inconvénients dont le premier est de générer un important trafic sur la ligne entre le gestionnaire et les agents pour la transmission des requêtes, des réponses à ces requêtes ainsi que des événements. Un autre important inconvénient est relatif à la lenteur du temps de réaction lors de l'apparition d'un événement, ceci étant dû au fait que l'agent concerné doit d'abord avertir le gestionnaire de cet événement qui ensuite doit prendre une décision manuelle ou automatique relativement à cet événement pour la transmettre audit agent qui à son tour l'exécute et enfin en rend compte au gestionnaire.

La présente invention a pour but de remédier à ces inconvénients de l'art antérieur et propose un procédé qui, entre autres, permet de réduire de manière très significative le trafic sur la ligne et le temps de réaction lors de l'apparition d'événements, procédé qui permet de surveiller efficacement le fonctionnement d'une ou plusieurs applications sur une pluralité de noeuds.

Pour cela le procédé de surveillance mentionné dans le préambule est remarquable en ce que la surveillance est configurée puis diffusée de manière filtrée à partir du noeud d'administration vers des agents autonomes, un agent autonome étant installé sur chaque noeud à surveiller pour, en offrant une corrélation intertype, soit traiter au plus près les différents types d'objets ou ensemble d'objets d'un domaine appelé objet global défini de manière générique, soit remonter des informations à visualiser vers l'interface graphique du noeud d'administration, chaque agent comportant une pluralité de modules spécifiques propres aux différents types d'objets ou à un domaine particulier, chaque module spécifique mesurant des paramètres statiques et dynamiques, particuliers au type d'objet qu'il surveille et collectant lesdites mesures, testant des conditions sur lesdits paramètres relativement à des seuils prédéfinis et déclenchant éventuellement des actions associées auxdites conditions testées, les paramètres, les conditions et les actions étant modifiables par l'utilisateur du noeud d'administration.

Ainsi, selon l'idée de l'invention et ceci contre toute attente, l'utilisation d'agents autonomes permet de s'assurer du bon fonctionnement des applications surveillées sur l'ensemble des noeuds à l'aide d'un traitement autonome et efficace, de faire remonter très rapidement des noeuds vers le noeud d'administration les informations utiles et de lancer de manière automatique des actions sur certaines conditions ou de conseiller éventuellement une action. De cette manière, pour assurer une surveillance efficace des applications fonctionnant sur la pluralité de noeuds, le procédé ici appliqué va permettre de mesurer des paramètres spécifiques de chaque application, de tester des conditions sur ces paramètres relativement à des seuils puis d'exécuter une action pour prévenir d'un problème, pour reconfigurer ou corriger. Pour cela, des mesures sont collectées pour réaliser une analyse en temps différé dans le but d'un examen statistique de l'activité surveillée. Ces mesures collectées concernent tous les types d'objets à surveiller, par exemple ici des instances telles que des bases de données comme Oracle (marque d'Oracle Corporation), Informix (marque de Informix Software, lnc.), les applications comme Tuxedo (marque de Novell, lnc.), différentes machines ou une quelconque machine d'un système, l'impression distribuée ("DPF" Distributed Print Facility : marque de Xerox Corporation), etc.. Des corrélations peuvent être réalisées entre plusieurs mesures différentes, en particulier, entre divers types d'objets : corrélation intertype.

L'utilisateur principal du procédé est l'administrateur de l'application ou l'opérateur. Sauf exception, l'opérateur ne peut agir directement autrement que pour consulter l'affichage pré-configuré. De préférence, pendant la surveillance, sont affichés l'état des applications ainsi que les courbes de paramètres choisies pour leur importance par l'administrateur, ceci afin de permettre de vérifier le bon fonctionnement de ou des objets sous surveillance. En outre, si l'opérateur ou l'administrateur désire, de manière ponctuelle mais interactive, visualiser certaines informations plus détaillées, un certain nombre de possibilités lui sont offertes comme l'affichage d'autres courbes de mesure ou le "zoom" sur des mesures ou des parties de courbes. Si, de manière générale, l'objet à surveiller est relatif à un objet unique (de base) faisant partie d'un environnement de production, ledit objet peut également être un objet global (ou une application globale), c'est-à-dire un ensemble d'objets de base contenant, par exemple, une ou plusieurs bases de données ainsi qu'une application du type Tuxedo et éventuellement d'autres objets de base. Ces objets globaux peuvent être soit, préalablement connus et donc traités de manière spécifique, soit non connus et, dans ce cas, traités comme une entité opaque mais contenant des objets de base connus. Dans chaque agent, installé au plus près des objets à traiter, une pluralité de modules spécifiques sont intégrés, chaque module étant spécifique d'un type d'objet, Oracle, Informix, Tuxedo, système Unix, impression distribuée (DPF), etc.. Chaque module spécifique mesure des paramètres particuliers au type d'objet qu'il surveille, il propose, par défaut, une liste de paramètres à mesurer, des conditions à évaluer et des actions associées. L'utilisateur a toute la latitude pour, à partir du noeud d'administration, modifier ces choix par défaut. Chaque agent autonome installé sur chaque noeud (ou machine), outre les mesures de paramètres qu'il effectue, les conditions qu'il évalue (sur ce noeud), les actions (reconfiguration, correction, alerte) associées aux conditions qu'il lance ou les traitements en temps différé qu'il opère, remonte au noeud d'administration les informations à afficher, telles que, par exemple, le changement d'état des objets, les valeurs de paramètres à visualiser sous forme de courbe, etc..

De cette manière, grâce à l'idée de l'invention, le noeud d'administration a une excellente visibilité globale puisque le présent procédé permet, une fois la surveillance configurée de manière filtrée (c'est-à-dire qu'une configuration est propre à un objet et son environnement et qu'ainsi un même objet peut être configuré différemment selon sa situation et sa distribution), de surveiller une pluralité de types d'objets, d'en donner des fonctions unifiées et également de permettre de corréler entre elles des mesures sur des objets de type différent. La corrélation porte sur l'affichage de courbes, de conditions, d'actions associées ainsi que sur l'analyse en temps différé. Il est en outre à remarquer que ce procédé doit être portable sur différentes plate-formes, ceci implique sa totale indépendance relativement à son environnement d'exécution, la visualisation se faisant au moyen d'une interface graphique propre audit procédé. Ce procédé est prévu pour autoriser tout interfaçage avec un quelconque système d'administration pour offrir à l'utilisateur une administration intégrée. Les agents autonomes accèdent aux différentes informations à travers les protocoles standards existants.

Avantageusement, pour l'application du procédé de surveillance selon l'invention, le noeud d'administration comporte entre autres, une interface graphique utilisateur pour la visualisation des objets sélectionnés et l'affichage de courbes de valeurs de paramètres, un fichier de configuration qui contient l'ensemble des configurations des objets avec la description desdits objets de même que l'ensemble des paramètres prédéfinis statiques ou dynamiques, ce fichier étant analysé et dynamiquement modifié ou complété, des fichiers d'état des noeuds à surveiller ainsi que les fichiers d'affichage des paramètres, les paramètres mesurés étant stockés dans un fichier d'analyse pour permettre leur affichage par l'intermédiaire de l'interface graphique.

De manière remarquable, l'agent autonome installé sur chaque noeud à surveiller se compose principalement d'un agent générique en relation avec une pluralité de modules spécifiques chacun propre à un type d'objet ou à un domaine particulier, de fichiers contenant les fonctions de base utilisées, chaque noeud à surveiller possédant de plus ses propres fichiers de paramètres, de conditions et d'actions associées pour contrôler sa propre surveillance et ainsi autoriser le traitement au plus près des différents types d'objets en mesurant les paramètres, en évaluant les conditions et en lançant les actions liées aux conditions et ceci pour tous les objets décrits.

Egalement de manière remarquable, lorsqu'une condition non liée à un paramètre porte sur un ou plusieurs paramètres et donc sur un ou plusieurs objets, ladite condition est traitée sur le noeud d'administration par un agent générique qui traite les conditions sur plusieurs noeuds, cet agent générique "d'administration" lançant l'action sur le noeud d'administration.

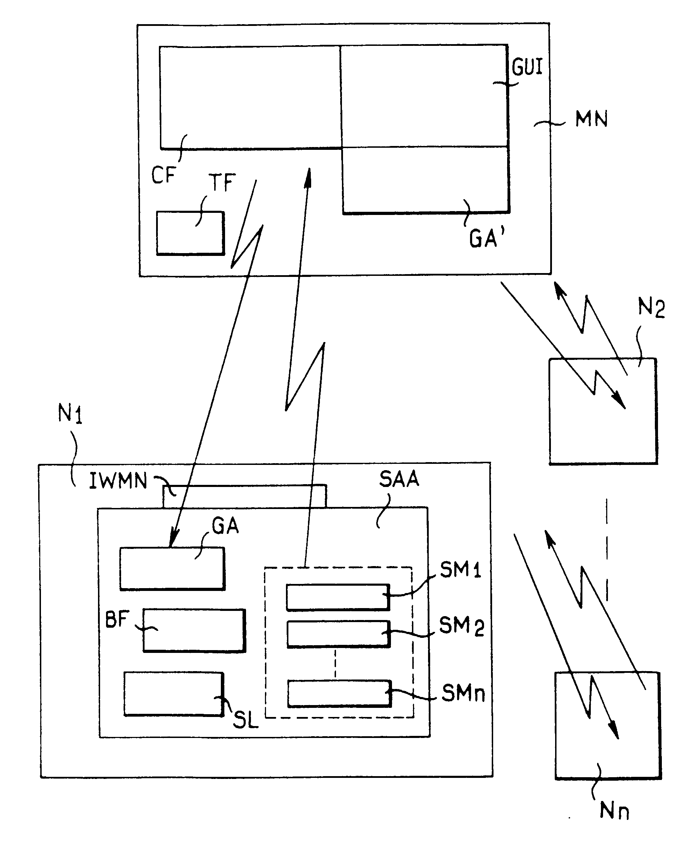

La description suivante en regard du dessin annexé, le tout donné à titre d'exemple non limitatif, fera bien comprendre comment l'invention peut être réalisée.

Sur la figure unique est représenté de manière très schématique un exemple d'application du procédé conforme à l'invention pour l'intercommunication entre un noeud d'administration et un noeud à surveiller.

Comme cela a été vu précédemment, le procédé selon l'invention permet de surveiller avantageusement n machines, c'est-à-dire n noeuds, Ni, N2 Nn, à partir d'un noeud d'administration MN. Principalement pour l'intercommunication qui intéresse l'invention, le noeud d'administration MN comporte un certain nombre de composants parmi lesquels l'interface graphique utilisateur GUI et le fichier de configuration CF. L'interface GUI permet de montrer dans la fenêtre principale sur l'écran les objets sélectionnés dans la liste des objets pouvant être visualisés, un icone pour chaque objet avec une couleur, par exemple, vert, orange et rouge, selon son état. Egalement, lorsqu'un objet est sélectionné et qu'un "zoom" est demandé par l'intermédiaire de la barre de menus, une fenêtre de nom de l'objet est affichée contenant tous les objets composant ledit objet. L'interface GUI permet aussi l'affichage de courbes de valeurs de paramètres avec, si cela est désiré, plusieurs courbes dans le même graphe. A chaque objet décrit, lors de la configuration de la surveillance, peut être adjointe une liste de graphes, tandis qu'à chaque graphe est associée une liste de paramètres à visualiser. L'interface GUI permet d'appeler au moins un outil d'administration pour chaque type d'objet alors qu'en outre, l'expertise ou l'expérience mémorisée d'un utilisateur ou d'un outil d'un utilisateur, qui est d'une aide précieuse pour la surveillance, peut être avantageusement affichée. Le fichier de configuration CF contient l'ensemble des configurations des objets avec la description desdits objets de même que l'ensemble des paramètres prédéfinis statiques ou dynamiques, il peut être analysé et dynamiquement modifié ou complété. Par téléchargement du fichier de configuration, par exemple, les agents autonomes sont installés, via l'interface IWMN (du noeud N1) avec le noeud d'administration MN sur les noeuds à surveiller à partir du noeud d'administration MN, une commande spécifique étant utilisée pour installer l'agent autonome SAA, comme ici sur la figure, sur le noeud N1. Chaque noeud à surveiller possède alors ses propres fichiers SL ("scanlog") de paramètres, de conditions et d'actions associées qui lui permettent de contrôler sa propre surveillance, le noeud d'administration détenant de plus les fichiers d'état des noeuds à surveiller ainsi que les fichiers d'affichage des paramètres (ensemble de fichiers "trace" TF). La mise à jour de la liste des noeuds où un agent autonome est installé est faite automatiquement par le noeud d'administration. Le lancement et l'arrêt du procédé de surveillance sont contrôlés par le noeud d'administration. De manière aisée, un objet nouveau peut se voir appliquer le procédé selon l'invention et être surveillé par un agent autonome déjà configuré. Un agent autonome SAA est principalement constitué d'un agent générique GA en relation avec des modules spécifiques SM (SM1, SM2,..., SMn) chacun propre à un type d'objet ou à un domaine particulier, ainsi que de fichiers parmi lesquels l'un est destiné à contenir les fonctions de base BF utilisées.

Le traitement des conditions peut concerner plusieurs objets, la question est alors de savoir sur quel noeud sont traitées les conditions. En effet, une condition peut être liée à un paramètre d'un objet, elle fait alors partie de la description de ce paramètre. Un paramètre contient la description de sa mesure (commande à lancer, analyse, affichage de courbe,...), la description d'un certain nombre de conditions simples portant sur la mesure qui vient d'être faite (opérateur, seuil, ...) avec pour chaque condition, l'action à lancer lorsque ladite condition est vérifiée. Un paramètre est attaché à un objet qui lui, est toujours associé à un noeud, le traitement du paramètre et de ses conditions se fait donc sur le noeud associé à l'objet. Par contre, une condition peut ne pas être liée à un paramètre, elle porte alors sur un ou plusieurs paramètres et donc sur un ou plusieurs objets. Dans ce cas, la condition est traitée sur le noeud d'administration où se trouve également un agent générique GA' légèrement différent de l'agent générique GA contenu dans un noeud à surveiller en ce qu'il traite les conditions sur plusieurs noeuds, cet agent GA' lançant l'action sur le noeud d'administration. En outre, une action, prédéfinie ou externe peut demander la valeur d'un paramètre d'un objet surveillé par un autre noeud que le noeud où est exécutée l'action. Dans ce cas, une des fonctions de base BF qui demande la valeur va transférer cette demande au noeud d'administration qui la dirigera alors sur le noeud adéquat et la valeur sera retournée en sens inverse.

Chaque module spécifique, SM1, SM2,..., SMn, documente sa partie prédéfinie en proposant des listes de choix par défaut de paramètres à mesurer (par exemple, identifiant de paramètre, description de la mesure, période, stockage ou pas des valeurs dans un fichier "trace" TF, affichage ou pas des valeurs), de conditions à évaluer sur ses paramètres et d'actions associées à lancer. Un paramètre peut être également une information sur l'état d'un objet (fonctionne bien, ce qui dans l'exemple précédent correspond à un icone de couleur verte, mise en garde ou alerte correspondant à un icone de couleur orange, alarme ou panne correspondant à un icone de couleur rouge) ou une mesure comme par exemple "le nombre de transactions par seconde". Si une condition de paramètre est vérifiée, une action est lancée et il est noté le fait qu'une action est lancée dans un fichier de journalisation d'actions (action, niveau, date, identifiant de paramètre, identifiant d'objet, noeud,...).

Pendant la configuration de la surveillance, l'utilisateur du noeud d'administration décrit les objets à surveiller [systèmes (Unix, ...), applications (Tuxedo, ...), instances (Oracle, ...), serveur (Informix,...), ...] et spécifie des modifications par rapport aux choix par défaut des modules spécifiques (modification de la période de mesure d'un paramètre par exemple, suppression d'un paramètre, ajout d'un paramètre ou d'une condition). Pour chaque nouveau paramètre à mesurer, il décrit la commande de mesure, précise s'il est désiré afficher la mesure (sous forme de courbe), spécifie les conditions qui vont déclencher une action (une séquence de traitements). L'action peut consister à afficher l'état "en panne" d'un objet (instance Oracle par exemple) en utilisant une fonction fournie par le produit ou bien effectuer un test de corrélation avec une information système (taux d'occupation cpu par exemple) ou de type Tuxedo ou encore définie par l'utilisateur.

Une fois la surveillance configurée, cette dernière peut être lancée. La configuration ne peut pas être modifiée pendant une surveillance, il est pour cela tout d'abord nécessaire d'arrêter la surveillance pour modifier la configuration puis de relancer la surveillance sur tous les agents.

Lorsque la surveillance est lancée sur chaque noeud à surveiller, le principe de base est que le "surveillant" sur chaque noeud ne dialogue pas avec le noeud d'administration sauf pour afficher l'état d'un objet ou la courbe d'un paramètre ou encore prévenir l'administrateur. Les actions sont soit locales, c'est-à-dire internes au noeud, soit demandent un service (essentiellement d'affichage) au noeud d'administration.

Egalement, une des fonctions de base présentée avec le présent procédé est prévue pour ramener (sur le noeud d'administration) les fichiers SL de journalisation de paramètres ainsi que ceux d'actions de chaque noeud surveillé, pour l'analyse indépendante réalisée par le noeud d'administration.

De cette manière, l'administrateur configure la surveillance en écrivant directement dans le fichier de configuration des commandes lignes. Cependant, selon une variante, il est possible d'utiliser un outil graphique de configuration qui générera le fichier de configuration. Ci-après est proposé un exemple de syntaxe des commandes ligne pour spécifier les objets et les paramètres.

Un # en début de ligne indique une ligne commentaire, ceci permet d'invalider une commande sans la supprimer ou de commenter le fichier.

Suit un exemple non limitatif de spécification de fichier de configuration que l'administrateur aurait la possibilité de réaliser pour décrire des objets qu'il voudrait surveiller, pour modifier le traitement prédéfini de l'agent (et des modules spécifiques) et/ou pour créer de nouveaux paramètres et conditions.
⇒ MAX_CPU percent of total cpu ;
signifie le temps maximum cpu alloué pour l'agent autonome (agent générique et modules spécifiques) sur un noeud. Si le maximum est atteint, les modules modifient la fréquence de mesure des paramètres et/ou donnent priorité à certains traitements.
⇒ PERIOD seconds ;
spécifie l'intervalle minimum de temps entre deux mesures d'un paramètre. Cette valeur globale peut être ponctuellement modifiée pour un paramètre ou une condition. 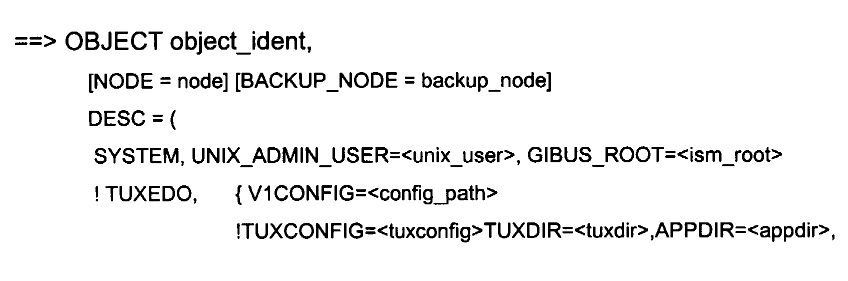 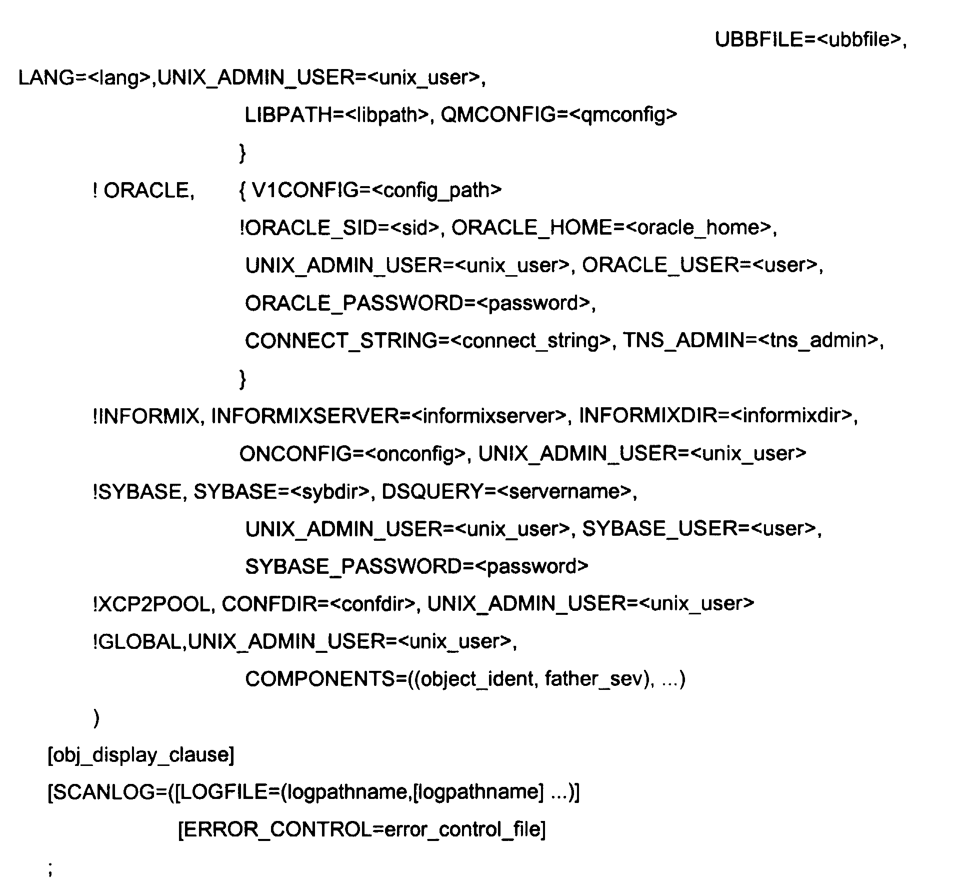 définit un objet "system" (un système Unix pris en charge par le module spécifique "System" qui mesure le taux d'occupation du cpu, le nombre d'entrées/sorties par seconde, ...), ou un objet "application Tuxedo", ou une "instance oracle", ..., ou encore un objet "global_object" composé d'une instance Oracle et d'une application Tuxedo par exemple.

L'utilisateur choisit (par l'intermédiaire de l'interface GUI) la liste des objets à voir (leur icone) dans la fenêtre principale de l'interface GUI. Un objet non sélectionné dans cette liste n'est vu que si un "zoom" est réalisé sur un objet global qui le contient. Un objet global peut également être référencé en tant que composant (COMPONENTS) d'un objet global et est composant d'un objet global [GLOBAL (une instance Oracle particulière est choisie dans la liste des objets à voir dans la fenêtre principale car les utilisateurs font directement du SQL sur la base)] car cette base est accédée par une application donnée. Quelques termes employés ci-avant, peuvent être ainsi explicités :

NODE :Pour un objet SYSTEM, NODE est le nom du noeud. Pour une instance Oracle, NODE est le noeud où se trouve l'instance. Pour une application Tuxedo, NODE est le "master node". Pour une application_globale, s'il n'y a aucun paramètre créé pour cet objet, on ne mentionne pas de NODE et s'il y a des paramètres créés pour cet objet, NODE doit être mentionné et la mesure sera exécutée (la condition sera évaluée et l'action lancée) sur le noeud spécifié par NODE.

BACKUP_NODE : est le nom du noeud où va tourner l'objet (le "master node" Tuxedo, l'instance Oracle, ...) en cas de basculement de l'application sur un autre noeud, pour raison d'exploitation ou d'arrêt, par exemple panne, du noeud d'origine. Cette information est utilisée pour démarrer rapidement la surveillance de l'objet sur le noeud "backup".

ORACLE : c'est le type de l'objet qu'on décrit. ORACLE_SID est le nom de l'instance. Quand un utilisateur se connecte à une base Oracle, il écrit <oracle_user>/<oracle_password>@<connect_string>. UNIX_ADMIN_USER est un nom d'utilisateur Unix qui sera utilisé par la surveillance, depuis le noeud d'administration, pour exécuter des traitements sur la base Oracle située sur le noeud à surveiller.

COMPONENTS : L'identifiant d'objet (object_ident) de tous les objets fils est donné et pour chacun des fils est donnée la couleur (OK [vert], WARNING [orange], DOWN[rouge]) héritée par le père si le fils prend la couleur rouge (DOWN). DOWN est la valeur par défaut de "father_sev".

SCANLOG : pour chaque objet l'administrateur peut désigner les fichiers SL de journalisation ("log") à explorer et les erreurs "graves" à rechercher. Si l'option SCANLOG n'existe pas, rien n'est fait sur les fichiers "log". Si le fichier "log" LOGFILE n'est pas décrit (les fichiers à explorer ne sont pas spécifiés), chaque module spécifique a prédéfini une règle de construction de la liste de fichiers à explorer. Le fichier error_control_file décrit les erreurs à rechercher dans les fichiers "log" et associe à chaque erreur un identifiant (chaîne de caractères) de classe d'action : si l'erreur est trouvée, l'action spécifiée est appelée en lui donnant la classe d'action associée qui sert à aiguiller sur le bon traitement. Par exemple, "ORA-0600': 2 ACT_RESTART" veut dire que si l'erreur "ORA-0600" est trouvée dans le fichier alert_<sid>.log alors une action (prédéfinie par le module spécifique ou fournie par l'administrateur en modifiant par MODIF_COND_PARAM le paramètre prédéfini ORA_PARAM_LOG) est appellée en passant comme argument la classe ACT_RESTART ainsi que "l'object_id", etc.. Si "ERROR_CONTROL" n'est pas décrit, le fichier prédéfini par chaque module spécifique est pris. Si une des erreurs mentionnées dans le fichier "error_control_file" apparaît, une action prédéfinie ou définie par l'utilisateur est activée.

SCANLOG=() veut dire prendre en compte les fichiers "log", le fichier "error_control_file" et l'action par défaut. 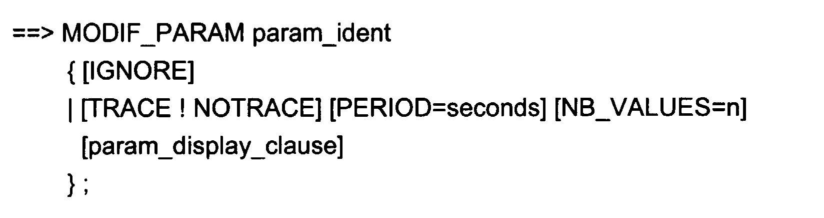 "param_ident" est l'identifiant du paramètre. Pour les paramètres prédéfinis par les modules spécifiques, "param_ident" est un mot-clé décrit : l'utilisateur peut modifier certains attributs de ce paramètre prédéfini [période, analyse ("trace"), affichage, la condition] ou le supprimer mais il ne peut pas changer la commande. L'information à obtenir est soit un indicateur d'état d'un objet (0 si "OK" [vert], 1 si "warning" [orange], 2 si "down" [rouge], par exemple) soit une mesure (métrique) d'un objet.

TRACE : la mesure est stockée dans un fichier TF "trace", pour une analyse autonome.

PERIOD est la période de collecte.

IGNORE : l'administrateur ne veut pas que ce paramètre soit mesuré périodiquement. Par défaut, chaque module spécifique va mesurer régulièrement un certain nombre de paramètres (métrique et indicateurs de santé). Ces paramètres sont décrits. Chaque paramètre qui est mesuré est identifié de manière unique pour un type d'objet. Exemple "Ora_Active_Transactions". Il est permis, dans une condition ou dans une action, de demander une mesure en temps réel et non périodique d'un paramètre qui a l'option IGNORE (voir la fonction de base "GetOnlineValue").

NB_VALUES : par défaut, chaque paramètre prédéfini pourra avoir un nombre maximum de valeurs rangées dans une table de résultat. Ce nombre prédéfini est propre à chaque paramètre : il dépend de fonctions prédéfinies comme "get_last_value", "get_delta", "get_average(20)", qui demandent la ou les n dernières valeurs du paramètre. Ce nombre prédéfini est donc cohérent avec les conditions et actions prédéfinies. Si l'administrateur ajoute des conditions ou actions externes qui demandent un plus grand nombre de dernières valeurs, il modifie le nombre par "NB_VALUES" (la nouvelle valeur doit être plus grande que la valeur prédéfinie, sinon il y a alerte ("warning") et le nombre de valeurs n'est pas modifié). 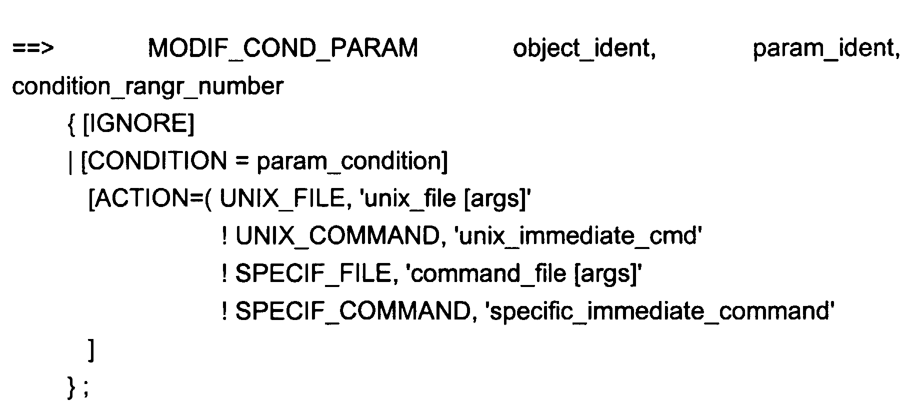 les paramètres, les conditions et les actions sont prédéfinis complètement, l'identifiant "param_ident" de chaque paramètre et donc la condition qui va être traitée, ainsi que sa période sont décrits.

Il est possible de modifier une condition simple prédéfinie associée à un paramètre et identifiée par l'identifiant "param_ident" du paramètre et le numéro de la condition (1, 2 ou 3). S'il est désiré modifié la période, il est nécessaire de passer par "MODIF_PARAM" de l'identifiant "param_ident". L'administrateur peut personnaliser en modifiant toute la condition ou le seuil (et son hystérésis ou la valeur de "DURING" conformément à la condition "param_condition"), ou l'intervalle de valeurs d'une condition, ou supprimer ("IGNORE") le traitement de cette condition, ou encore fournir sa propre action à exécuter si la condition est vérifiée. Pour "UNIX_FILE", "UNIX_COMMAND", "SPECF_FILE" et "SPECIF_COMMAND" voir dans la suite "CREATE_PARAM". Chaque module spécifique documente ses paramètres prédéfinis et en particulier sa condition : test du résultat de la mesure par rapport à un seuil ou par rapport à un seuil pendant n secondes ou par rapport à un intervalle ("RANGE"). 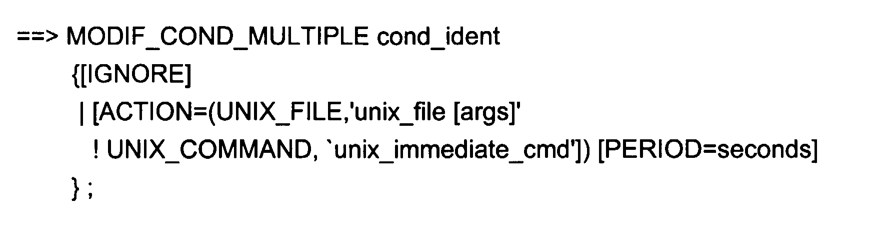 permet de modifier une condition multiple prédéfinie identifiée et documentée sous le nom "cond_ident". Les seuils d'une condition multiple ne peuvent pas être modifiés : l'administrateur peut supprimer la condition multiple prédéfinie et s'en créer une nouvelle ou il met les seuils qu'il désire.

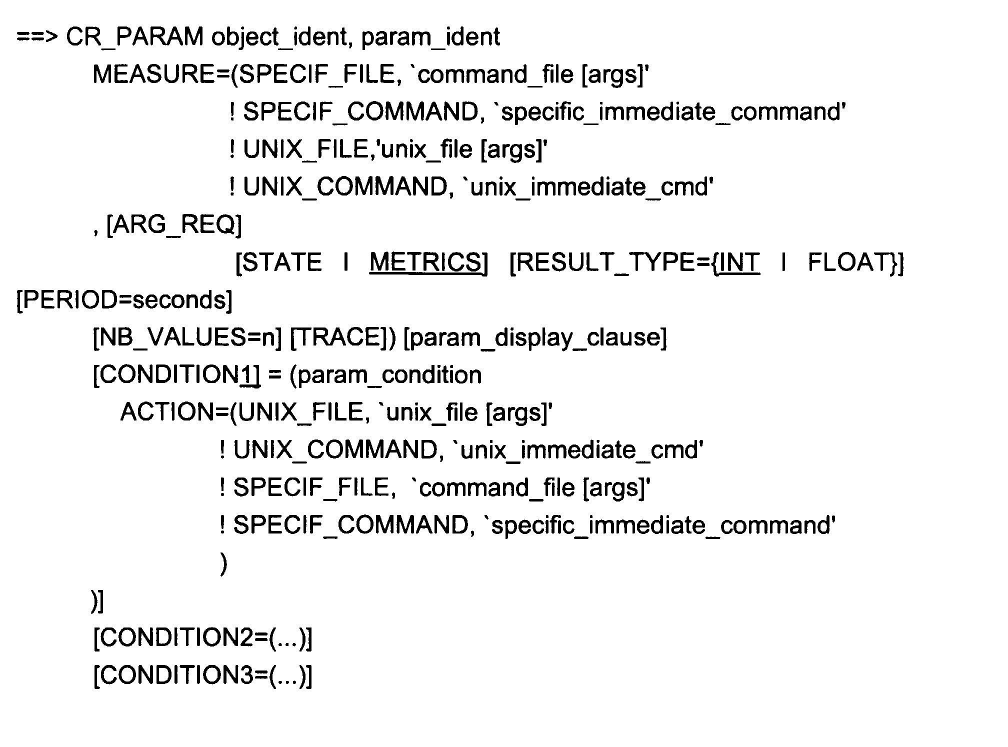

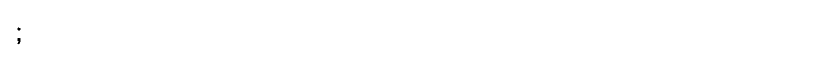

L'administrateur peut créer ses propres paramètres et leur associer une commande ("MEASURE=").

SPECIF_FILE : si l'objet est Oracle, il est fait du SqlPlus sur le fichier sql. Autorisé pour les objets de type Oracle, Informix, Sybase. L'exécution est lancée pour le compte de l'utilisateur "ORACLE_USER" (pour Oracle) spécifié dans l'objet.

SPECIF_COMMAND : si l'objet est Oracle, il est fait du Dynamic Sql sur cette commande sql. Autorisé pour les objets de type Oracle. L'exécution est lancée pour le compte de l'utilisateur "ORACLE_USER" spécifié dans l'objet. Longueur maximum de la commande : 512.

UNIX_FILE et UNIX_COMMAND: la commande unix est lancée. Autorisé pour tous les objets. L'exécution est lancée pour le compte de l'utilisateur "UNIX_ADMIN_USER" spécifié dans l'objet. Dans le cas de "UNIX_FILE", le fichier "unix_file" est téléchargé (au démarrage de la surveillance) sur le noeud associé à l'objet référencé par "object_ident". Pour "UNIX_COMMAND", il n'y a pas de téléchargement : la commande est transportée par le paramètre.

Si "object_ident" est un objet "GLOBAL", la commande est exécutée sur le noeud spécifié par "OBJECT ... NODE=node ..."

STATE ou METRICS : un paramètre est soit un paramètre d'état (il représente le bon fonctionnement d'un objet) ou une métrique (le nombre de transactions par seconde, par exemple). Si "STATE", en fin de traitement de la mesure, il est appelé la fonction d'affichage de l'état de l'objet (icone vert/orange/rouge) si l'état a changé depuis la dernière mesure.

RESULT_TYPE : "INT" (entier) ou "FLOAT" (pour un pourcentage par exemple).

CONDITION : si l'utilisateur crée un paramètre et qu'il précise une condition simple, il l'écrit "dans la foulée". La condition est évaluée "dans la foulée" de la mesure et non indépendamment du moment où la mesure est faite.

ACTION : on spécifie le nom complet d'un programme shell ou binaire suivi éventuellement de paramètres ("UNIX_FILE") ou une commande Unix ("UNIX_COMMAND") ou d'un fichier sql ("SPECIF_FILE") ou une commande sql ("SPECIF_COMMAND"). Un exemple est "ACTION=(UNIX_FILE, all_actions_binary action_1')" : l'administrateur fournit un seul programme pour toutes les actions. Ce programme aiguille selon le premier paramètre qui est le nom d'une action particulière. Le procédé de surveillance appelera ce programme avec tous les paramètres mis dans "unix_file [args]" et ajoutera des paramètres qui représentent le contexte comme l'identifiant "object_ident", l'identifiant "param_ident", la valeur du paramètre (voir fonctions de base plus loin).

ARG_REQ : mettre cette option si la mesure demande un argument qui sera fourni plus tard dans "single_condition" dans "GetOnlineValue". Permet de faire un contrôle à la référence dans "single_condition". Exemple : "GetOnlineValue(or714.ORA_TS_FREE_PERCENT, TABLESPACE_1)" donne le pourcentage libre de l'espace table "TABLESPACE_1".
⇒ CREATE_COND (single_condition [ AND/OR single_condition ] ...) ACTION =(UNIX_FILE , 'unix_file [args] [PERIOD=n] ;
pour une condition créée par l'utilisateur, il spécifie la période et l'action. Mises entre parenthèses possibles pour la résolution des conditions uniques ("single_conditions"). La condition est évaluée par l'agent générique GA' sur le noeud d'administration. L'action est lancée sur le noeud d'administration (le fichier "unix_file" se trouve donc sur ce noeud).
⇒ obj_display_clause :
DISPLAY= ([GRAPH=(graph_ident TITLE="..." [TYPE=curve ! pie ! histogram] [MIN=min_value, MAX=max_value]) [GRAPH=(graph_ident...)]...])

GRAPH : l'administrateur associe à un objet des graphes de paramètres. "TITLE" est le libellé du graphe.

TYPE pour courbe, camembert, histogramme, quand on affiche des paramètres dans un graphe de type "courbes", il faut donner la valeur min et la valeur max pour représenter l'ordonnée (sachant que l'abscisse est la date de la mesure du paramètre). Le défaut est 0,100 comme pour un pourcentage. L'icone est en vert/orange/rouge selon son état ("OK", "WARNING", "DOWN").
⇒ param_display_clause : DISPLAY= ("param_title", [GRAPH=(graph_ident [graph_ident]...))

Par défaut, aucun paramètre n'est affiché, "param_title" est le libellé du paramètre. GRAPH : spécifier dans quels graphes se trouve le paramètre. Plusieurs paramètres peuvent appartenir à un même graphe si il est désiré les voir ensemble.

En outre, par défaut, sur chaque type d'objet (oracle, Tuxedo, system, ...), il est fait un certain nombre de contrôles d'état. Si un de ces contrôles est négatif, il entraîne le déclenchement d'une action et l'objet en question (instance Oracle, application Tuxedo, ...) verra son icone changer d'état (et donc de couleur) sur l'écran d'administration.

Ci-après, il est donné des exemples de conditions attachées à un paramètre. Le caractère # veut dire "object_ident.param_ident". Il n'est pas nécessaire de spécifier "object_ident.param_ident" puisque que c'est le paramètre courant. 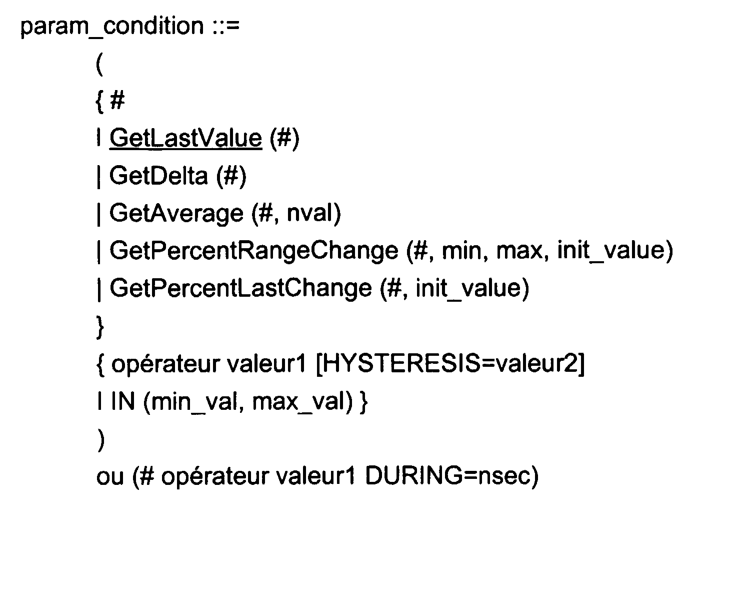 # ou GetLastValue (#) : la dernière valeur mesurée. C'est la fonction par défaut si on ne spécifie pas de fonction : "objid.paramid".

GetDelta (#): delta, en valeur absolue, entre les deux dernières valeurs.

GetAverage (#, nval) : moyenne des nval dernières valeurs du paramètre, pas de moyenne sur plus de 20 valeurs.

GetPercentRangeChange (#, min, max, init_value) : changement par rapport à un intervalle de valeurs : (val2 - val1)/(max - min).

GetPercentLastChange (#, init_value) : changement par rapport à la valeur précédente : (val2 - val1)/val1.

opérateur : <, <=, >, >=, ==, !=

valeur1 : seuil

HYSTERESIS=valeur2 ⇒ la condition n'est vraie que si la valeur du paramètre est précédemment retombée en dessous de "valeur2" puis a ré-atteint le seuil "valeur1". Pour ne pas faire d'action en rafales. Par défaut, l'hystérésis a la valeur du seuil ("valeur1").

DURING=nsec : est-ce que la valeur du paramètre est "opérateur" (plus grand par exemple) que le seuil pendant un temps donné "nsec" ? La fonction de base transforme le temps "nsec" en nombre "nval" de valeurs puis teste que les "nval" dernières valeurs sont toutes "plus grandes" que le seuil. Rend 1 si vrai, 0 sinon.

IN : est-ce que la valeur mesurée est comprise dans l'intervalle [min_val, max_val]?

### Exemple :

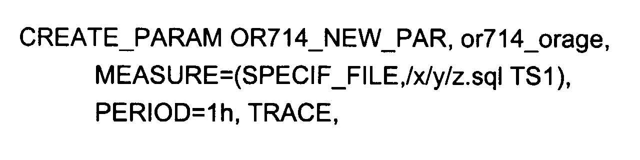

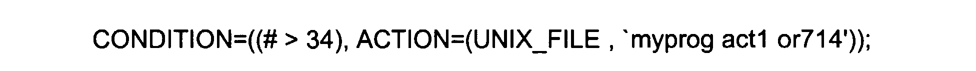

En ce qui concerne la condition simple :

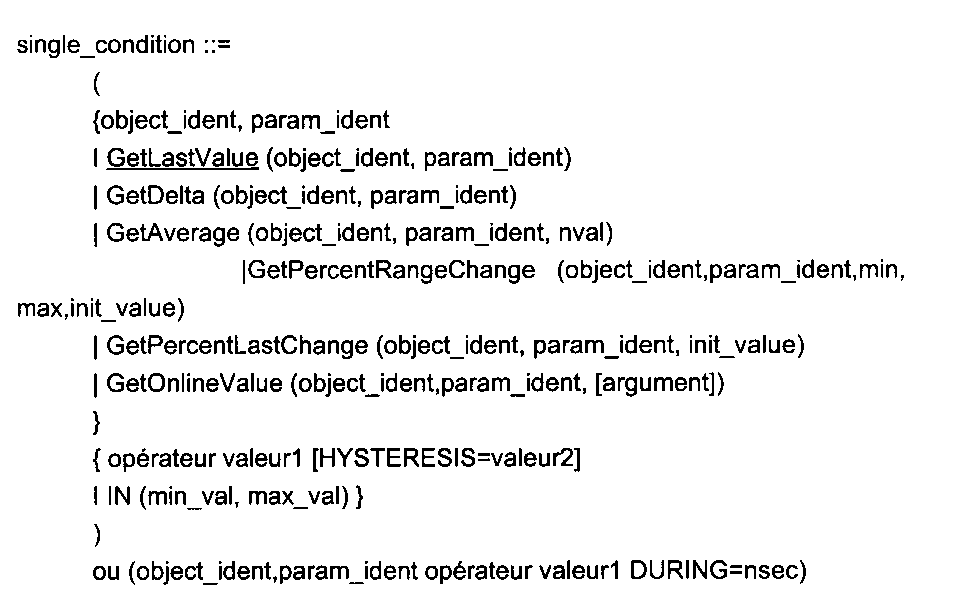

GetLastValue (objid.paramid) : la dernière valeur mesurée. C'est la fonction par défaut si on ne spécifie pas de fonction : "objid.paramid".

GetDelta (objid.paramid): delta, en valeur absolue, entre les deux dernières valeurs.

GetAverage (objid.paramid, nval) : moyenne des nval dernières valeurs du paramètre, pas de moyenne sur plus de 20 valeurs.

GetPercentRangeChange (objid.paramid, min, max, init_value) : changement par rapport à un intervalle de valeurs : (val2 - val1)/(max - min).

GetPercentLastChange (objid.paramid, init_value) : changement par rapport à la valeur précédente : (val2 - val1)/val1.

GetOnlineValue (objid.paramid, argument) : faire la mesure en temps réel plutôt que de chercher la valeur du paramètre dans le tableau des mesures déjà faites. La fonction "GetOnline" ne peut pas se trouver dans une condition attachée à un paramètre. Elle ne peut être que dans une condition multiple (ou dans une action). Le paramètre "paramid" a été documenté comme acceptant ou non un argument. Voir l'option "ARG_REQ" de "CREATE_PARAM".

Une condition multiple ne pourra pas contenir plus de dix conditions simples.

### Exemple :

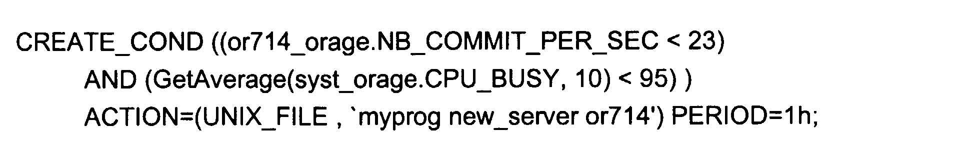

De préférence le procédé selon l'invention est utilisé comme suit. L'administrateur décrit les objets à surveiller : "OBJECT object_id", ... Il spécifie les modifications à apporter sur les attributs d'un paramètre prédéfini, pour un objet donné "object_id" :
- pour supprimer un paramètre : MODIF_PARAM param_id, object_id, IGNORE;
- pour changer un attribut du paramètre : MODIF_PARAM param_id, object_id, TRACE, PERIOD=...

Ensuite il spécifie les modifications à apporter sur une condition d'un paramètre prédéfini, pour un objet donné "object_id" :
- pour supprimer une condition : MODIF_COND_PARAM cond_id, object_id, IGNORE;
- pour changer tout ou partie de la condition : MODIF_COND_PARAM cond_id, object_id, CONDITION=(# > 45);
ou MODIF_COND_PARAM cond_id, object_id, CONDITION=( # > 95 DURING=30sec),
ou MODIF_COND_PARAM cond_id, object_id, CONDITION=(# IN (0,350));
- pour changer l'action associée : MODIF_COND_PARAM cond_id, object_id, ACTION=(...);

Puis il spécifie les modifications à apporter sur une condition multiple prédéfinie (et documentée) :
- pour supprimer une condition multiple : MODIF_COND_MULTIPLE cond_id, IGNORE;
- pour changer l'action associée : MODIF_COND_MULTIPLE cond_id, ACTION=...;
- pour changer la période de la condition : MODIF_COND_MULTIPLE cond_id, PERIOD= 5mn.

Egalement, il crée un nouveau paramètre à mesurer sur un objet donné :
- paramètre sans condition, à analyser ("trace") : CREATE_PARAM param_id, object_id, MEASURE=(...), PERIOD=5mn,TRACE,...;
- paramètre avec condition/action : CREATE_PARAM param_id, object_id, MEASURE=(...), PERIOD=5mn, CONDITION=((object_id.param_id > 95) ACTION=(UNIX_FILE , 'myprog act1').

Enfin, il crée une nouvelle condition (multiple ou simple) sur des paramètres (prédéfinis ou nouveaux) : CREATE_COND ( (obj1.param1 > 95) AND (obj2.param2 > 80 during 3mn) ) ACTION=(UNIX_FILE ,'myprog act1') PERIOD=15mn.

Les actions sur condition peuvent être explicitées comme suit. Une action est déclenchée si :
- une condition sur un ou plusieurs paramètres (état ou métrique) est vraie,
- une condition multiple est vraie,
- une erreur grave apparaît dans un fichier "log" ou "trace".

Pour une action d'une condition attachée à un paramètre, les paramètres envoyés à l'action sont : "object_ident", "param_ident", "condition_number", "param_value", "seuil", "opérateur", "object_specif_string".

Pour une action d'une condition multiple, les paramètres envoyés à l'action sont :"cond_ident".

L'action peut être prédéfinie ou fournie par l'administrateur. Elle peut comprendre :
- une demande d'affichage d'état ("ok", "down", "warning") d'un ou plusieurs "objets à surveiller" et donc rafraîchissement de l'icone selon l'état à afficher. Un "objet à surveiller" est toujours affiché sous forme d'icone,
- une correction prédéfinie, immédiate, avec ou sans demande d'accord via l'interface GUI,
- une proposition prédéfinie de correction, à lancer en différé,
- un envoi de message vers l'administrateur [interface GUI ou historique d'un produit ou connaissance d'une gestion de systèmes intégrée, courrier, signal sonore ("beep"), ...],
- une action correctrice, complètement décrite par l'administrateur. Cela peut correspondre à ajouter un serveur Tuxedo si le taux d'occupation cpu n'est pas supérieur à x %,
- un test de corrélation sur d'autres informations "ora|tux|syst", puis si ce dernier est satisfait, action comme ci-dessus. Donc demander la valeur d'un autre paramètre ("last_value", moyenne sur n valeurs, "delta", valeur "online"),
- ouvrir, sur l'écran d'administration, un dialogue avec l'administrateur pour qu'il spécifie les actions à faire. Cela permet dynamiquement de réagir à des problèmes précis. Ceci ne devrait pas être utilisé systématiquement dans les actions.

Quelques exemples non limitatifs de réalisation de paramètres prédéfinis Oracle sont à présent proposés :
- paramètre "ORA_USER_ACCESS" dans lequel la mesure consiste à faire un essai de connexion au moyen de la fonction "connect_string" fournie à l'utilisateur, la condition correspond à vérifier si l'essai a ou n'a pas abouti et l'action réside en l'analyse de la cause et en la relance éventuelle.
- paramètre "ORA_FREE_TS" dans lequel la mesure consiste à déterminer le pourcentage d'espace libre par rapport à la taille de l'espace table ("Tablespace"), la condition1 est, si la mesure est < 5%, déclencher action1 qui correspond à créer un fichier dans un système de fichiers ("FileSystem") utilisé par l'espace table (Tablespace), alors que la condition2 est, si mesure < 10%, envoyer un message d'alerte (WARNING) vers l'interface GUI (GUI/Events).
- paramètre "ORA_FRAGMENT_TS" dans lequel la mesure consiste à vérifier la condition qui correspond à ce que la plus grande des étendues ("MAX_EXTENTS") des tables de l'espace table ("Tablespace") soit plus petite que le plus grand trou de l'espace table, si cette condition est vérifiée, envoyer une fenêtre proposition d'action dans laquelle il est signifié qu'il faut réorganiser l'espace table ("Tablespace") selon les propositions suivantes :
   * soit, il est créé automatiquement un fichier pour agrandir l'espace table ("Tablespace"),
   * soit, il est demandé quand une commande standard "d'export/traitement_tables/import" sera lancée,
   * soit, il est demandé à l'administrateur de programmer le lancement de son utilitaire de réorganisation.
- paramètre "ORA_SCANLOG" dans lequel les erreurs Oracle à traiter dans le fichier "alert.log" sont prédéfinies. A chaque erreur correspond une classe d'action prédéfinie. Exemple :
   ORA-0603:ACT_RESTART1
   ORA-1600:ACT_ARCHIVE_INCREASE,
la mesure consistant à rechercher les erreurs prédéfinies dans le fichier "alert.log", la condition étant, si l'erreur est trouvée agir en appelant l'action prédéfinie ou externe liée à la classe d'action de l'erreur trouvée (ACT_RESTART1 ⇒ relancer l'instance par startup).

Egalement, suivent des exemples non limitatifs de fonctions de base. Ces fonctions de base peuvent être utilisées dans les actions fournies par l'administrateur. L'administrateur ne peut pas utiliser de fonctions demandant plus de valeurs que ce qui est possible pour un paramètre (voir "NB_VALUES"). Ces fonctions de base sont également utilisées en interne dans les actions par les modules spécifiques et l'agent générique. Voir les paragraphes ci-avant relatifs aux conditions pour certaines fonctions de base utilisées dans les conditions.

Une fonction de base comme "GetLastValue" peut demander la valeur d'un paramètre relatif à un objet surveillé par un autre noeud.

Ces fonctions doivent pouvoir être appelées dans un programme C et dans un programme "shell".
- GetLastValue (object_ident, param_ident, &result_int) : retourne la dernière valeur mesurée d'un paramètre.
- GetAbsDelta (object_ident, param_ident, &result_int) : retourne la valeur "différence entre les deux dernières valeurs" du paramètre (en valeur absolue).
- GetSignDelta (object_ident, param_ident, &result_int) : retourne la valeur "différence entre les deux dernières valeurs" du paramètre (valeur avec son signe).
- GetAverage (object_ident, param_ident, &result_int, nval) : retourne la moyenne sur les "nval" dernières valeurs d'un paramètre. Limite : "nval" ne peut pas être plus grand que 20.
- GetOnlineValue (object_ident, param_ident, &result_int, argument) : retourne la valeur de la mesure en temps réel plutôt que de chercher la valeur du paramètre dans le tableau des mesures déjà faites. Le paramètre "param_ident" a été documenté comme acceptant ou non un argument (voir l'option "ARG_REQ" de "CREATE_PARAM"). Cette fonction ne fait que faire la mesure, ce qui signifie que si ce paramètre a des conditions/actions, elles ne sont pas évaluées. On peut faire "GetOnlineValue" sur un paramètre (et un objet) qui a l'option "IGNORE" (cela veut donc dire que le module spécifique a la description du paramètre, sans les conditions/actions).
- GetPercentRangeChange (object_ident, param_ident, &result_int, min, max, init_value) : changement par rapport à un intervalle de valeurs (val2 - val1)/(max - min). Val2 est la valeur mesurée, "val1" est la mesure précédente.
- GetPercentLastChange (object_ident, param_ident, &result_int, init_value): changement par rapport à la valeur précédente : (val2 - val1)/val1.
- SetVarString (object_ident, variable_name, string_value) : mettre une valeur dans une variable définie. par l'utilisateur. Cette variable sera utilisée dans la fonction "GetVar" pour connaître la valeur. Ce mécanisme peut être utilisé pour transmettre des informations entre une mesure et une action, entre deux mesures, entre deux actions. L'étendue d'une variable est l'identifiant d'objet ("object_ident"). Les variables sont chaînées à un objet précis. L'utilisateur ne peut pas faire "SetVarString" sur une variable dont le nom commence par I_, ceci, afin de protéger les variables affectées par un module spécifique.
- SetVarlnt (object_ident, variable_name, int_value). même chose que pour "SetVarString" mais la valeur est un entier ("int").
- GetVarString (object_ident, variable_name, &string_ptr): retourne un pointeur (dans "string_ptr") sur la valeur de la variable.
- GetVarlnt (object_ident, variable_name, &int_value): retourne un entier qui est la valeur de la variable.
- GetCurrentObjectld () : rend l'identifiant d'objet ("object_ident") de l'objet courant traité par le module spécifique dans l'action. Permet, dans une action, de tester la valeur d'un autre paramètre du même objet par "GetLastValue(GetCurrentObjectld(),ORA_COMMITS)".
- GetLocalNodeObjectld () : rend l'identifiant d'objet ("object_ident") de l'objet système du noeud local. Permet dans une action de tester la valeur du cpu sur le noeud local par l'intermédiaire des fonctions suivantes : "GetLastValue(GetLocalNodeObjectld(),SYST_CPU_BUSY)".
- TestDuring (object_ident, param_ident, time, operator, threshold): retourne la valeur vrai (1) ou faux (0) de la condition : est-ce que la valeur du paramètre est "operator", plus grand par exemple que le seuil pendant un temps donné. La fonction de base transforme le temps en nombre n de valeurs puis teste que les n dernières valeurs sont toutes "plus grandes" que le seuil.
- Trace (object_ident, param_ident, type_value, param_value) : mettre la mesure d'un paramètre dans le fichier "trace" pour analyse indépendante (nom du fichier : "appl_survey.<node>.<dateofday>.params.trc"). La fonction de base ajoute le nom de la machine, la date/heure. Type_value est un entier : 1 (int) ou 2 (float)
- StopObjSurvey (object_ident): l'agent générique envoie cette fonction vers l'interface GUI pour qu'elle affiche l'état de l'objet en icone. L'agent générique met d'abord le champ "survey_status" à 1 (stop) pour l'objet. Le champ "survey_status" peut être : 0 (objet sous surveillance), 1 (objet à ne plus surveiller), 2 (objet dont la surveillance doit démarrer : par "start_survey"), 3 (objet dont on ne traite pas les paramètres).
- DisplayGraph (object_ident, param_ident, param_type, param_value) : afficher la valeur du paramètre, par l'intermédiaire de l'interface GUI. La fonction de base envoie également la date/heure.
- DisplayState (object_ident, param_ident, objtype, severity_level, msg, line1val, line2val) : remonter l'état d'un objet, pour que l'interface GUI le visualise. L'interface GUI modifie l'état de l'icone associé à l'objet. "Objtype" est, par exemple, ORACLE, SYSTEM, TUXEDO, etc. "Msg" est une information détaillée sur l'état de l'objet : via le "bouton2" (milieu), l'interface GUI affiche cette information. L'action d'afficher se fait sur la machine d'administration. "Line1val" et "line2val" (lignes sous l'icone) sont les valeurs des deux lignes : "NULL" veut dire ne pas afficher la ligne sous l'icone.
- DisplayStateInternalSon (object_ident, internal_objid, param_ident, internal_objtype, father_sev_level, internal_sev_level, msg, line1val, line2val) : remonter l'état d'un objet, pour que l'interface GUI le visualise. L'interface GUI modifie l'état de l'icone associé à l'objet. "Internal_objtype" est, par exemple, "TUX_MASTER", "TUX_NODE", "TUX_QUEUESPACE". "Msg" est une information détaillée sur l'état de l'objet : via le "bouton2" (milieu), l'interface GUI affiche cette information. L'action d'afficher se fait sur la machine d'administration. "Line1val" et "line2val" (lignes sous l'icone) sont les valeurs des deux lignes : "NULL" veut dire ne pas afficher la ligne sous l'icone.
- RemovelnternalSon (object_ident) : informer l'interface GUI que l'objet père étant "DOWN" (panne), il n'est pas possible d'accéder aux fils internes. Il faut donc ne plus voir les icones associés aux objets fils internes.
- SendHisto (severity, object_type, message, ack_required) : remonter un message dans l'historique d'un produit. "object_type" identifie le module spécifique (oracle, tuxedo, système, ...).
- SendlsmAlarm (severity, object_type, message, ack_required) : remonter une alarme vers l'alarme d'un produit de gestion de systèmes intégrée. "object_type" identifie le module spécifique (oracle, tuxedo, système, ...). Sévérité à préciser.
- SendMsg (severity, object_type, message, ack_required) : si "severity" est W ou I : "SendHisto". Si "severity" est A ou E et si produit de gestion de systèmes intégrée présent, en tant que "super gestionnaire", alors "SendlsmAlarm" sinon "SendHisto". Si "ack_required=1" : un icone drapeau (produit de gestion de systèmes intégrée ou historique d'un produit) se lève indiquant qu'un message est à acquitter dans l'alarme du produit de gestion de systèmes intégrée ou dans l'historique d'un produit.
- DisplayMessage (message) : afficher sur la machine d'administration une fenêtre contenant le message et un bouton "OK" pour supprimer la fenêtre.
- AskForCommand (message, réponse) : afficher sur la machine d'administration une fenêtre contenant le message demandant si l'administrateur est d'accord pour qu'on exécute telle commande. Retourne la réponse (1 : oui, 0 : non) à la question. Selon la réponse, faire ou non la commande. Si aucune réponse n'est recue après un délai déterminé, la commande n'est pas effectuée.
- "prévenir l'admin" ("mail", "beep", "msg console", ...)

Suivent pour une bonne appréhension du procédé divers exemples de configuration. Le premier exemple concerne Oracle : 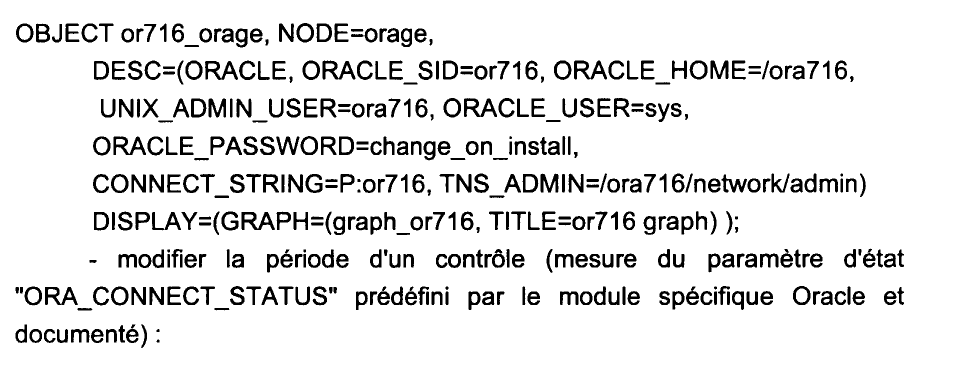 MODIF_PARAM or716_orage, ORA_DB_ACCESS, PERIOD=1h;
- remplacer dans la condition la valeur du seuil d'espace libre :
   MODIF_COND_PARAM or716_orage, ORA_TS_FREE_TOOLS, 1, CONDITION = (# < 15);
- créer un nouveau paramètre avec une condition/action : 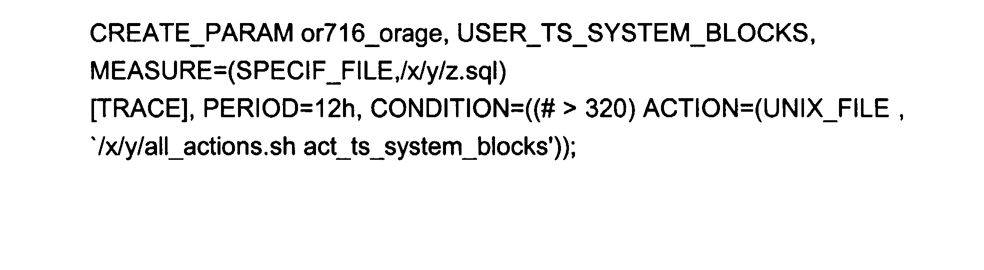
- remplacer l'action prédéfinie qui était d'émettre un message vers l'historique d'un produit. En fournir une autre qui consiste à poster dans la "crontab" l'exécution d'un utilitaire Oracle sur les espaces table ("tablespaces") trop fragmentés :
   MODIF_COND_PARAM or716_orage, ORA_ALL_TS_FRAGMENT, ACTION=(UNIX_FILE, '/oraclelaction_ora action_name') ;
- supprimer le traitement d'un paramètre prédéfini :
   MODIF_PARAM or716_orage, ORA_TS_FREE_SYSTEM, IGNORE;
- modifier les options par défaut du traitement d'un paramètre prédéfini :
   MODIF_PARAM or716_orage, ORA_TS_FREE_SYSTEM, TRACE, DISPLAY=(TS minfree, GRAPH=(graph_or716));;

Le second exemple concerne l'ensemble Tuxedo/Oracle/System.
- décrire un objet global ( par exemple "flowbus_appli") constitué par une application "Tuxedo tux_demo_fb" (dont le "master node" est orage) qui utilise une base "Oracle or714_orage" et tournant sur le noeud "syst_orage". A chaque objet est associé un graphe de courbes de mesures. Les objets (leur icone) "tux_demo_fb" et "or714_orage" ne sont visualisés que si l'utilisateur demande un zoom après avoir cliquer sur l'objet global ("flowbus_appli") : 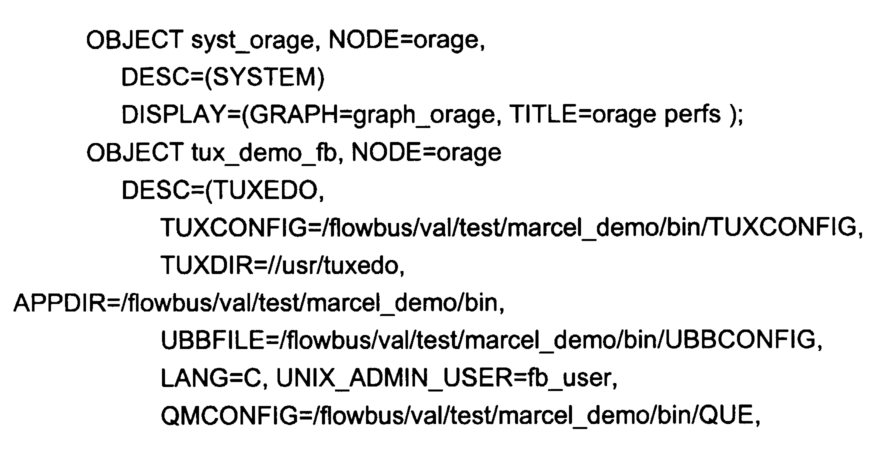 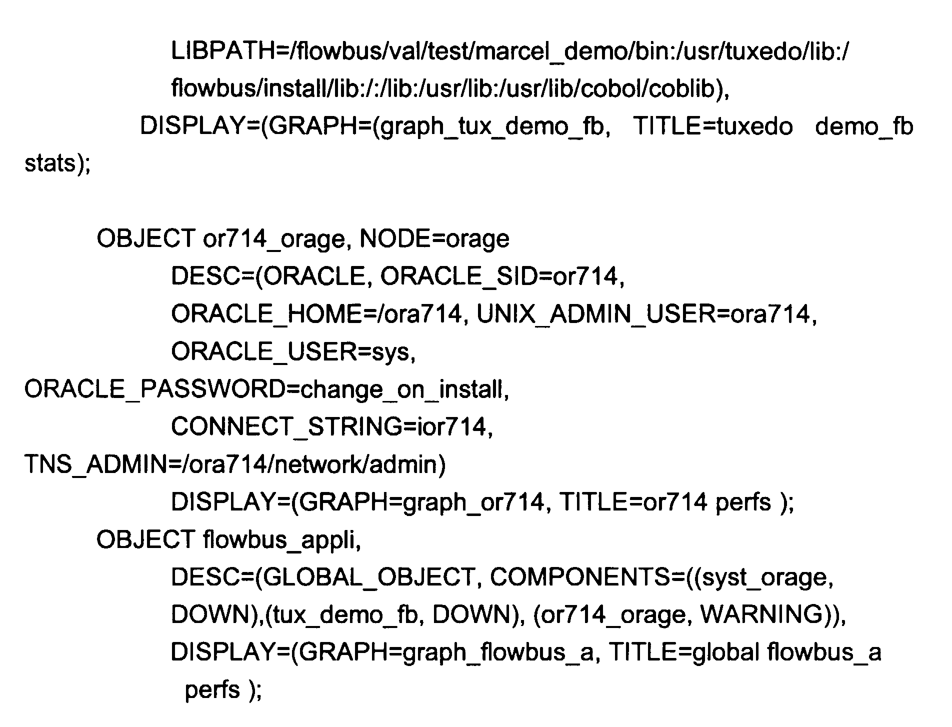
- créer un nouveau paramètre nombre de messages dans la queue Q1, sans condition/action : 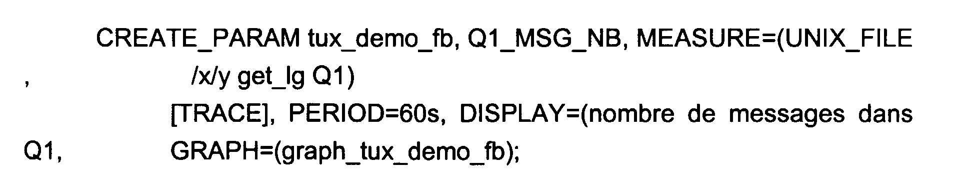
- afficher des paramètres dans des graphes de mesures :
   MODIF_PARAM syst_orage, SYST_CPU_BUSY, DISPLAY=(cpu busy, GRAPH=(graph_flowbus_a, graph_orage));
   MODIF_PARAM syst_orage, SYST_l0_HDISKO, DISPLAY=(hdisk0 : KB/sec, GRAPH=(graph_flowbus_a, graph_orage));
   MODIF_PARAM or714_orage, ORA_SRV_NB, DISPLAY=(nombre de serveurs oracle dédiés, GRAPH=(graph_flowbus_a, graph_or714));
   MODIF_PARAM or714_orage, ORA_COMMIT_PER_SEC, DISPLAY=(nombre de commits/sec, GRAPH=(graph_or714));
   MODIF_PARAM tux_demo_fb, TUX_TPS, DISPLAY=(nombre de services/sec, GRAPH=(graph_flowbus_a, graph_tux_demo_fb));
   MODIF_PARAM tux_demo_fb, TUX_CLIENT_NB, DISPLAY=(nombre de clients Tuxedo, GRAPH=(graph_flowbus_a, graph_tux_demo_fb));
   MODIF_PARAM tux_demo_fb, TUX_SERVER_NB, DISPLAY=(nombre de serveurs Tuxedo, GRAPH=(graph_flowbus_a, graph_tux_demo_fb));

Les graphes suivants seront affichés si il est cliqué sur le "bouton3" des objets :
Graphe "graph_flowbus_a" : "click" sur "objet flowbus_appli"
   cpu busy
   hdisk0 : KB/sec
   nombre de serveurs oracle dédiés
   nombre de services/sec
   nombre de clients Tuxedo
   nombre de serveurs Tuxedo
Graphe "graph_orage" : click sur "objet syst_orage"
   cpu busy
   hdisk0 : KB/sec
Graphe "graph_tux_demo_fb" : "click" sur "objet tux_demo_fb"
   nombre de messages dans Q1
   nombre de services/sec
   nombre de clients Tuxedo
   nombre de serveurs Tuxedo
Graphe graph_or714 : "click" sur "objet or714_orage"
   nombre de serveurs oracle dédiés
   nombre de commits/sec

Le troisième exemple est relatif à FSX.
OBJECT fs_oracle_orage NODE=orage DESC=(FILESYSTEM, NAME="/oracle", MIN_FREE=20, MAXSIZE=300MB, INCRSIZE=1MB);
- modifier la période du contrôle (mesure du paramètre "FS_FREE_SPACE")
   MODIF_PARAM fs_oracle_orage, FS_FREE_SPACE, PERIOD=1h;
- remplacer l'action prédéfinie qui est d'agrandir le système de fichiers, jusqu'à la taille maximale. En fournir une autre qui consiste à tester que tel fichier "log" ne grandit pas anormalement, auquel cas, voir si le niveau de "trace" est correct et si ce n'est pas le niveau de "trace" qui n'est pas adapté, alors ... :
   MODIF_COND_PARAM fs_oracle_orage, FS_FREE_SPACE, ACTION=(UNIX_FILE, '/oracle/action_fs action_name') ;
- remplacer la valeur du seuil "minfree" :
   MODIF_COND_PARAM fs_oracle_orage, FS_FREE_SPACE, CONDITION=(# < 15 HYSTERESIS=18) ;

En fonctionnement autonome ("offline"), la collecte des paramètres se fait dans un fichier "paramlog" sur chaque noeud surveillé. Les actions sont enregistrées dans un fichier "actionlog" sur chaque noeud surveillé, en particulier pour :
- permettre la gestion d'archives sur une période plus ou moins longue, l'affichage d'activités passées, les rapports de statistiques (sur un jour/semaine/mois/an et différents zooms sur les informations "systeme/DB/TP/EpochBackup/). Permettre les statistiques par application Tuxedo, par instance de base de données, par application X ou Y, par "machine/cluster". Permettre la collecte/analyse d'informations pour surveiller que la mise au point ("tuning" SGA, ...) est toujours correcte (via un appel à "DbaExpert" ou autre). Stocker les recommandations.

L'agent autonome conforme à l'idée de l'invention se compose principalement d'un agent générique et d'une pluralité de modules spécifiques à chaque type d'objet : oracle, tuxedo, système, DPF, FSX, SAP ... Le travail global consiste à mesurer des paramètres, si besoin est les stocker dans un fichier "trace" et permettre leur affichage par l'intermédiaire de l'interface GUI, à évaluer les conditions simples ou multiples et à lancer l'action liée à la condition vraie et ceci pour tous les objets décrits dans le fichier de configuratiion.

L'agent générique "d'administration" (sur le noeud d'administration) gère les données d'entrée suivantes :
- d'un côté toutes les données qui ont été prédéfinies par chaque module spécifique, pour tous les objets du même type :
   * des paramètres avec leurs attributs (période de mesure, analyse (trace)/affichage avec sa période). Chaque paramètre a un identifiant de paramètre. L'administrateur peut modifier des attributs de ce paramètre.
   * éventuellement, une condition simple associée à un paramètre ou une condition multiple sur plusieurs paramètres, ainsi que l'action liée à la condition. Une condition simple ou multiple est identifiée (identifiant du paramètre pour une condition liée à un paramètre ou identifiant de condition pour une condition multiple) : l'administrateur peut modifier des attributs de cette condition.
- d'un autre côté toutes les données qui ont été spécifiées par l'administrateur :
   * des modifications sur les attributs prédéfinis : analyse ("trace"), période, affichage, les données pour un objet particulier ou la suppression d'un paramètre.
   * des modifications sur les conditions prédéfinies : changer le seuil d'une condition simple, l'action, la période ou supprimer la condition.
   * des créations de paramètres avec éventuellement une condition simple.
   * des créations de conditions simples ou multiples avec une action associée.

Le traitement de l'agent générique d'administration se fait de la manière suivante:
- lecture de son fichier de configuration. Analyse syntaxique et sémantique ("MODIF_PARAM" d'un paramètre inexistant, ...).
- fusion du fichier de configuration fourni par l'administrateur et du fichier de configuration fourni par les modules spécifiques.
- envoi du fichier de configuration résultant à chaque agent (en filtrant relativement aux objets à surveiller sur la machine et en tenant compte des problèmes inhérents aux noeuds en panne ou aux noeuds prévus pour la sauvegarde des données d'un noeud en panne sur un autre noeud).

Le traitement de l'agent générique d'un noeud autre que le noeud d'administration se fait de la manière suivante :
- lecture de son fichier de configuration, seuls les objets locaux à ce noeud sont traités.
- construction de la table d'objets ("OBJECTS").
- construction de la table de configuration des paramètres ("CONFIG_PARAM").
- construction de la table des valeurs de paramètres ("PARAM_VALUES"):
   * chaque paramètre de chaque objet a au moins un emplacement pour mettre sa/ses valeur(s). S'il y a des fonctions comme moyenne ("paramid", 20) ou durée d'exécution, alors le nombre d'emplacements à réserver pour ce paramètre de cet objet est calculé.
- construction de la table des conditions multiples ("COND_MULTIPLE").
- fourniture des fonctions de base à l'usage des modules spécifiques pour certaines et pour les actions externes pour d'autres.
- lancement des modules spécifiques :
   * les modules spécifiques "lourds" comme Oracle, Informix, Tuxedo possèdent un traitement propre. D'autres comme FSX, DPF peuvent être regroupés dans un seul traitement. Le but est de ne pas sérialiser toutes les surveillances mais d'en faire un certain nombre en parallèle. L'ensemble global ne doit quand même pas consommer plus que le taux maximal ("MAX_CPU") de cpu autorisé.
   * ne lancer que les modules qui ont un objet à surveiller.
- configuration à partir du service de surveillance de fichiers, par exemple RSF ("Remote System Facility"), de manière à permettre le traitement de l'exploration des fichiers de journalisation ("logs") de tous les objets décrits.
- évaluation de chaque condition multiple, avec sa période :
   * chercher les valeurs des paramètres dans la table des valeurs de paramètres ("PARAM_VALUES") ou via la fonction "get_online".
   * si la condition multiple est vérifiée : lancer l'action (interne ou externe).
- surveillance régulière du bon fonctionnement des modules spécifiques (envoi d'un paramètre spécial et attente de la réponse).

Outre les fonctions de base fournies à l'extérieur, l'agent générique et les modules spécifiques utilisent les fonctions de base internes suivantes :
- PutValue (object_ident, param_ident, param_value) : ranger dans la table "PARAM_VALUES" la dernière valeur d'un paramètre donné d'un objet donné. Cette fonction est utilisée par les modules spécifiques après la mesure du paramètre.
- ExecMeasure (param_entry) : voir "traitement d'un paramètre".
- ProcessHysteresis (object_ident, param_ident, param_value) : si le champ "action" n'est pas validé ("ACTION_SWITCH OFF") alors tester "param_value" avec l'hystérésis. Si inférieur (en fait opérateur inverse de celui pour le seuil) valider ce champ ("ACTION_SWITCH ON") sinon l'invalider ("ACTION_SWITCH OFF"). "ACTION_SWITCH" est un champ de la structure condition et est initialisé à "ON". Si on place "ACTION_SWITCH" à "ON" pour une condition, il faut faire de même pour les conditions de rang supérieur, c'est-à-dire les conditions 2 et 3 si on met "ACTION_SWITCH" à "ON" pour la condition 1.
- EvalConds (param_entry) boucle sur les conditions d'un paramètre et appelle "EvalCond" (voir "traitement d'un paramètre"). Cette fonction permet de tester le champ "action_switch" de l'entrée paramètre avant de lancer l'action.
- EvalCond (cond_entry) évalue (vrai/faux) une condition.
- ActionCondParam (object_ident, param_ident, condition_number, param_value, condition_buffer, object_specif_string) et ActionCondMultiple (action_name, action_type, cond_ident) : Ces fonctions permettent de lancer une action. Si "action_type" est interne ("internal", prédéfini par le module spécifique) alors appeler un point d'entrée interne au module spécifique en lui passant les arguments "object_ident", etc.. Si "action_type" est externe ("external", fourni par l'administrateur) et si un fichier spécifique est concerné ("SPECIF_FILE"), appeler un point d'entrée du module spécifique qui traite le fichier de commande, mais si c'est une commande spécifique qui est concernée ("SPECIF_COMMAND"), appeler un autre point d'entrée du module spécifique qui traite la commande. Dans le cas où un fichier Unix ou une commande Unix ("UNIX_FILE" ou "UNIX_COMMAND") sont concernés, ouvrir le fichier de synchronisation appelé aussi "tube" par l'homme du métier (commande "popen" qui est la contraction de "pipe open") sur la chaîne fournie en ajoutant comme arguments ce qui permet de caractériser le contexte : "object_id", "param_id", ... La fonction de base enregistre dans le fichier "actionlog" du noeud local le fait que cette action est exécutée : nom du fichier "actionlog appl_survey.<node>.<dateofday>.actions.trc".

Ces fonctions de base sont utilisées par les modules spécifiques et doivent pouvoir être appelées dans un programme C.

Le traitement d'un module spécifique (système Unix, courrier, FSX, impression DPF [Distributed Print Facility], oracle [base de données], informix [système de bases de données Unix], Tuxedo [application], FlowBus [gestionnaire de flux interapplication], XCP2 [eXtended Cooperative Protocol level 2], SAP [Service Access Point], ...) se fait de la manière suivante :
- exploration de la table de configuration des paramètres ("CONFIG_PARAM"), en ne traitant que ses propres objets :
   * paramètres déjà triés par période croissante.
   * pour chaque paramètre de chaque objet, selon la période :
      . faire la mesure en utilisant la commande interne (paramètre prédéfini) ou externe ("CREATE_PARAM"), la mettre dans la table "PARAM_VALUES".
      . si une analyse ("trace") est effectuée, mettre la valeur dans le fichier "trace" global de l'agent autonome (voir fonctions de base).
      . si un affichage est demandé, afficher la valeur ou l'état.
      . évaluer la condition simple, si elle existe, lancer l'action (interne ou externe) si la condition est vraie.
- traitement des demandes inopinées ("get_online") de mesure en temps réel de paramètre.

Le traitement d'un paramètre est effectué de la sorte :
- si le paramètre est validé et la période déterminée :
   si param.valid_param_entry & param.period_OK
   alors return_code = ExecMeasure (param_entry)
- si une condition sur un paramètre existe et que le paramètre est validé
   si param.cond_exists & param.valid_param_entry & (return_code == 0)
   alors EvalConds (param_entry)

Le contenu de la fonction de base "ExecMeasure" pour réaliser la mesure de paramètre est plus précisément explicité ci-dessous :
si param.measure_type="internal", alors
status=param.measure_cmd(param.param_ident,object_ident,&param_value)
sinon status=exécuter param.measure_cmd (programme shell ou binaire) avec pour argument : (param_ident, l'object_ident), lancer en redirigeant sa sortie dans un "pipe". Convention : le programme externe met sa valeur dans sa sortie standard et la valeur du paramètre mesuré est récupérée en lisant le fichier "pipe".
si (status == 0), alors
PutValue (param.object_ident, param.param_ident, param_value) si param.trace alors Trace(param.object_ident, param.param_ident, param_value)
si param.param_display alors DisplayGraph (param.object_ident, param.param_ident, param_value)

Le contenu de la fonction de base "EvalConds" pour évaluer les conditions sur les paramètres est plus précisément explicité ci-dessous :

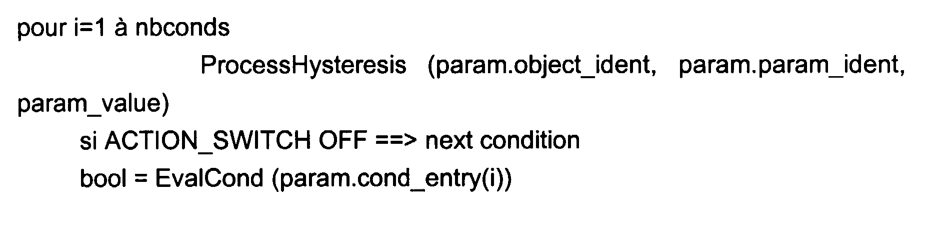

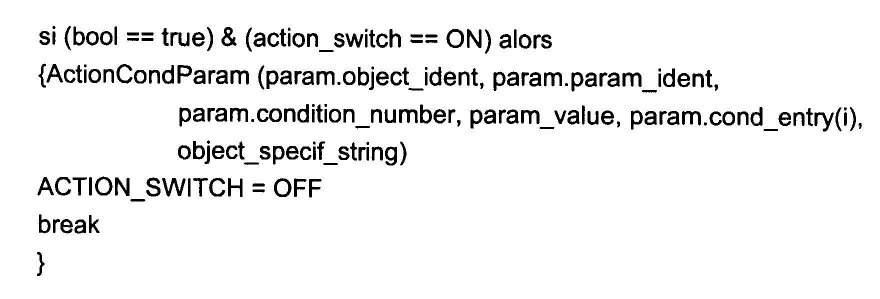

Suivent deux exemples de code, le premier relatif au code de la commande de mesure ("measure_cmd") du module spécifique, plus particulièrement du module spécifique "FILESYSTEM" (FS):

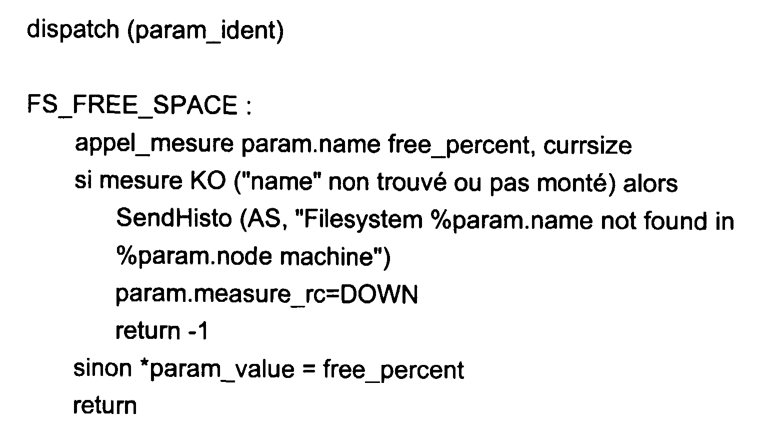

Le second exemple est relatif au code "d'action du module spécifique" :

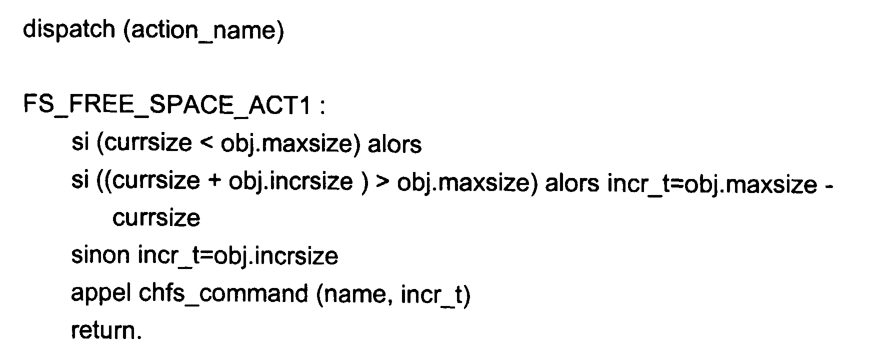

A ce stade de la description, plusieurs remarques sont à faire :
- la mesure envoie les messages si un problème est rencontré dans ladite mesure.
- si n conditions sont imposées, une seule action est effectuée, celle de la première condition vraie ("cond1" puis "cond2" puis "cond3").
- les champs suivants sont à prévoir dans l'entrée "param" :
   measure_rc (OK,KO)
   param_state (state, metric)
   action_switch (ON,OFF) : initialisé à ON, mis à OFF si la valeur du paramètre est inférieure (en fait opérateur inverse de celui pour le seuil) à l'hystérésis. Par défaut, l'hystérésis a la valeur du seuil.
      Le champ "action_sw" est testé dans la fonction de base "EvalConds".
- un paramètre "state" a toujours ses deux dernières valeurs dans la table "résultat".
- à un instant donné, l'accès est autorisé à une entrée objet et à une entrée paramètre.
- lorsqu'un agent est déporté sur le noeud d'administration pour surveiller une pluralité de noeuds, il peut être nécessaire de prévoir un gestionnaire (manager) SNMP qui dialogue avec les agents SNMP standard sur les noeuds concernés. Cet agent déporté gère les fichiers "paramlog" et "actionlog" sur le noeud d'administration.

Le traitement des actions est réalisé comme suit :
- l'agent générique et les modules spécifiques demandent à lancer une action (prédéfinie ou fournie par l'extérieur).
- toute action reçoit des arguments qui représentent le contexte qui déclenche l'action :
   . l'identifiant d'objet (object_ident), l'identifiant du paramètre (param_ident), le numéro de la condition (condition_number, si condition multiple).
   . pour une condition simple : la valeur mesurée du paramètre, son seuil et son hystérésis, l'opérateur (>,<,=, !=).

Le lancement d'une action est traité par une fonction de base : voir ci-avant avec les fonctions de base " ActionCondParam" et "ActionCondMultiple".

En ce qui concerne le traitement des fichiers de journalisation ("logs") des applicatifs, pour chaque module spécifique, toute erreur spécifiée dans le fichier "ERROR_CONTROL" qui apparaît dans un fichier "log" de l'objet ("alert.log", "ULOG", ...) génère l'exécution d'une action. Pour chaque objet à surveiller, l'administrateur spécifie la liste des fichiers "logs" à explorer ("SCANLOG" dans la commande "CR_OBJECT" de la configuration) et un fichier de contrôle d'erreur ("error control file"). Des valeurs par défaut sont prévues. Ce fichier de contrôle d'erreur décrit les erreurs à sélectionner (les "ora_err" par exemple) et la classe d'erreur associée à chaque erreur. Cette classe d'erreur sera transmise à l'action liée à la condition du paramètre prédéfini "PARAM_LOG" et servira à un aiguillage plus fin sur la séquence de traitements à faire qui consiste, par exemple, à sauver des fichiers d'analyse ("trace") ou des informations complémentaires. La séquence de traitements dans l'action est prédéfinie mais peut être entièrement écrite par l'administrateur. Il est important de rappeler que toute action déclenchée entraîne l'enregistrement ("logging") dans le fichier "actionlog" avec le message d'erreur dans ce cas. Un exemple de fichier de contrôle d'erreur ("error_control_file") est ci-après proposé :
"ORA-0603":ACT_RESTART1
"ORA-1600":ACT_INCREASE_ARCHIVE
...

Avant de lancer les modules spécifiques, l'agent générique génère une configuration "RSF" pour chaque objet si le fichier "SCANLOG" est décrit pour l'objet.
- si le fichier "LOGFILE" décrit les noms des chemins des fichiers de journalisation ("logpathname") : une entrée dans la configuration "RSF" par le nom du chemin de fichier de journalisation ("logpathname").
- si le fichier "LOGFILE" n'est pas décrit, l'agent générique appelle une fonction du module spécifique ("mstype" est le type du module spécifique) "<mstype>_build_lognames (object_entry, lognames_array)" qui retourne une liste de noms de fichiers à explorer, comme par exemple avec Oracle :
   $dbhome/rdbms/log/alert_<sid>.log,
   $dbhome/network/log/listener.log,$dbhome/
   sqlnet.log, etc... L'agent générique appelera, par exemple, l'application Tuxedo chaque jour juste après minuit car le nom du fichier "log" contient la date du jour.

La configuration "RSF" est personnalisée par le fichier "error_control_file". Si une erreur est trouvée dans un nom de chemin de fichier de journalisation ("logpathname"), un message est généré vers le fichier "ApplicationJournal" et un message est généré dans le fichier "error_param_<mstype>" sur le noeud à surveiller et dans le fichier "AS_scanlog" dans le répertoire "GUI_FILES_DIR" sur le noeud d'administration, de format :
object_id error_code act_class logpathname ligne_contenant_l_erreur.

Puis l'agent générique lance le traitement de la configuration "RSF".

Le module spécifique a prédéfini un paramètre "PARAM_LOG" (qui est ignoré si l'option "SCANLOG" n'existe pas pour l'objet). Dans ce cas, il effectue une mesure qui consiste à lire un message dans le fichier "error_param_<mstype>" sur le noeud à surveiller, pour l'identifiant d'objet ("object_id") courant. Le module spécifique gère un point courant par l'identifiant d'objet ("object_id"). Si la condition posée "message trouvé" est vérifiée, l'action associée est appelée, avec comme arguments le contexte classique, le code erreur ("error_code"), la classe d'action ("act_class"), le nom de chemin de fichier de journalisation ("logpathname") et la "ligne_contenant_l_erreur". L'action prédéfinie va permettre d'enregistrer le fait que la ligne a été trouvée. Cette action prédéfinie peut être remplacée par l'administrateur par une action externe.

En ce qui concerne l'analyse autonome ("offline"), la collecte des paramètres se fait dans un fichier paramètre sur chaque noeud surveillé. Les conditions vraies sont enregistrées dans un fichier d'analyse ("trace") sur chaque noeud surveillé. Une telle analyse autonome est utilisée pour la gestion d'archives sur une période déterminée, pour l'affichage d'activités passées, pour les rapports de statistiques (sur un jour/semaine/mois/an et différents zooms sur les informations relatives au "système/DB/TP/EpochBackup/). Des statistiques peuvent être ainsi établies par application Tuxedo ou pour une quelconque application, par instance de base de données, par "machine/cluster", etc.. La collecte et l'analyse d'informations pour surveiller que la mise au point ("tuning", SGA, ...) est toujours correcte. L'analyse autonome peut être également réalisée en ramenant les fichiers "paramlog" et "actionlog" de chaque noeud "N_agent" sur le noeud "N_admin". L'analyse autonome peut être de plus réalisée en récupérant les fichiers d'analyse ("trace") des outils comme "DbaXpert" (Db*Activity, space monitor) ou autres.

L'arrêt du surveillant sur le noeud "N_admin" arrête les surveillants sur les noeuds "N_agent".

Il peut être ici rappelé que la configuration de la surveillance est diffusée de manière filtrée à partir du noeud d'administration vers chaque agent autonome de chaque noeud à surveiller au moment du lancement dudit agent autonome, sachant que chaque noeud à surveiller a ses propres fichiers de journalisation de paramètres ("paramlog") et d'action ("actionlog") ainsi que ses propres processus de surveillance, tandis que le noeud d'administration, en tant que tel, possède de plus les fichiers d'état des objets surveillés ("obj_state") et d'affichage des paramètres ("display_params"). Chaque agent est "réactivable" automatiquement, ceci signifie que lorsqu'un agent devient actif sur un noeud, il commence par lancer la commande "mkitab" pour se mettre dans la table d'initialisation "inittab" pour pouvoir être réactivé si le processus meurt ou si le noeud tombe en panne puis est réactivé. Quand un agent est désactivé, il lance la commande "rmitab" pour ne pas être réactiver alors que le noeud d'administration ne le connaît plus.

Si un noeud à surveiller est déclaré indisponible ou hors d'usage, ses objets (instance oracle, application Tuxedo, ...) qui étaient à surveiller et qui ont été basculés sur un noeud de secours ("backup") doivent être suivis par l'agent autonome sur le noeud de secours. Une manière simple peut être de modifier le fichier de configuration sur le noeud de secours en remplaçant le nom du noeud indisponible par le nom du noeud de secours, ceci signifiant que toute la configuration est envoyée aux agents sans supprimer les objets non surveillés par un agent sur un noeud donné. Pour cela, la commande :
NewObject old_node_object_ident OBJECTS=(object_ident, object_ident ...),
qui permet de faire connaître à l'agent sur le noeud de secours les nouveaux objets à surveiller, objets qui étaient surveillés par l'agent sur le noeud devenu indisponible. Dans "OBJECTS" ne sont spécifiés que les objets (base Oracle, application Tuxedo, ...) qui ont été basculés sur le noeud de secours.

De manière non limitative, les principales caractéristiques de quelques modules spécifiques sont ci-après précisées. Ainsi, relativement au module spécifique à FSX, il doit être, entre autres, permis :
- de spécifier, pour le procédé selon l'invention, des objets à surveiller relatifs aux systèmes de fichiers ("FILESYSTEM") et relatifs à la pagination ("PAGING_SPACE").
- d'appeler et intégrer l'interface GUI de configuration FSX depuis le menu "Configuration" du présent procédé.
- d'autoriser des traitements tels que le contrôle périodique sur l'espace libre du disque et son extension.
- de modifier la période du contrôle ou changer d'action si le contrôle est positif.
- de mesurer des paramètres tels que le coefficient d'occupation et la taille maximale ("free_percent" et "max_size") en utilisant la condition prédéfinie (si free_percent < config_min) et (max_size + incrsize <= config_max) alors action d'extension.
- à l'administrateur de créer des conditions contenant [si (condition) et si (objl.free_percent < n)] alors ...

De même, relativement au module spécifique à l'impression distribuée (DPF), il doit être, entre autres, permis :
- de mesurer des paramètres de performances (nombre de pages par heure, par exemple).
- de demander une impression, de gérer les demandes d'impression, de gérer les queues, les dispositifs.
- de démarrer et arrêter le traitement différé sur un noeud.
- de configurer les fichiers de traitement différé.
- de contrôler l'état des fichiers de traitement différé, des queues locales, des dispositifs et des demandes d'impression avec, si un problème est rencontré, la possibilité de mise d'un message dans un fichier "log" exploré par "RSF" qui alarme l'administrateur. Ces contrôles sont faits par un "démon" "dpf_status_chk" sur chaque noeud du domaine DPF.
- de contrôler l'état des serveurs DPF et générer automatiquement l'action qui corrige l'état anormal. Un outil comme "lb_admin" trouve les serveurs enregistrés et le "démon" "dpf_server_chk" contrôle que ces serveurs répondent. S'ils ne répondent pas, ils sont automatiquement "tués" et l'enregistrement supprimé alors qu'un message est mis dans le fichier "log" exploré par "RSF" qui lance une alarme : alarme (fenêtre "affichage d'un message" ou dialogue pour savoir si l'administrateur veut qu'une action proposée soit exécutée (avec résultat visualisé dans une fenêtre), l'état (et des informations détaillées) étant remonté vers l'interface GUI pour visualisation alors que de plus il est possible de changer la période de certains tests (donc documentés et identifiés "param_ident" par le module spécifique), de supprimer un paramètre "contrôle", et de dire si une analyse ("trace") est désirée ou non. Les "démons" sont lancés automatiquement par le système d'exploitation ("process init") et redémarrés automatiquement lors de l'apparition d'une panne. Le nom du chemin "pathname" du fichier "log" exploré par "RSF" est configurable.
- d'appeler un outil d'administration dans le menu "Tools" comme DbaXpert, Tux_GUI, Onperf, ...
- de collecter des métriques.

Suit un exemple de mise en oeuvre du module spécifique à DPF :
- paramètre DPF_SPOOLER_STATUS
   mesure : 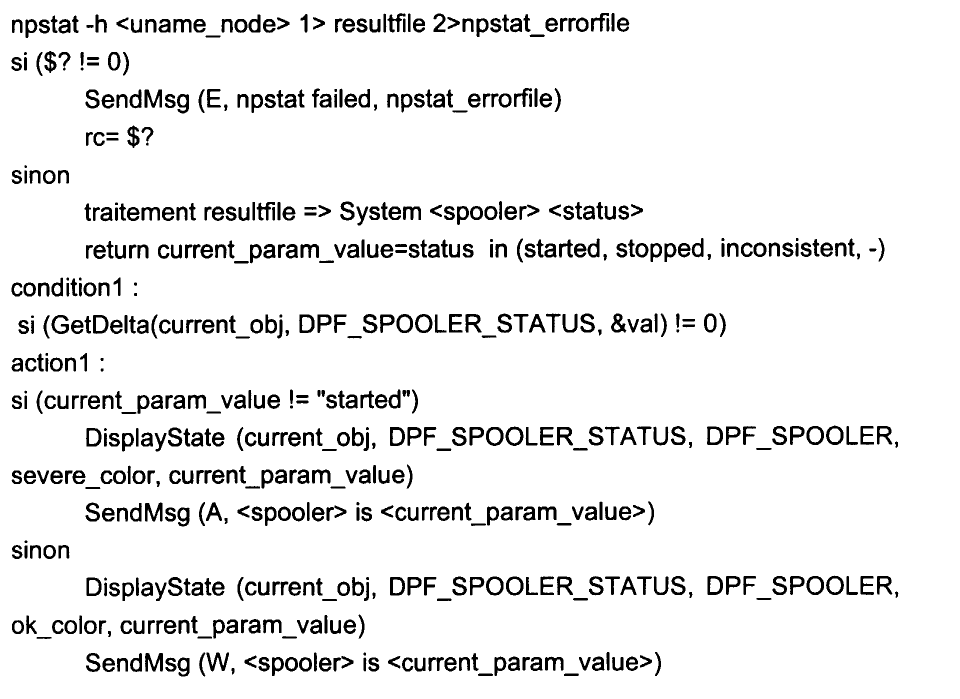
- paramètre DPF_QUEUE_INSTATUS
   mesure : 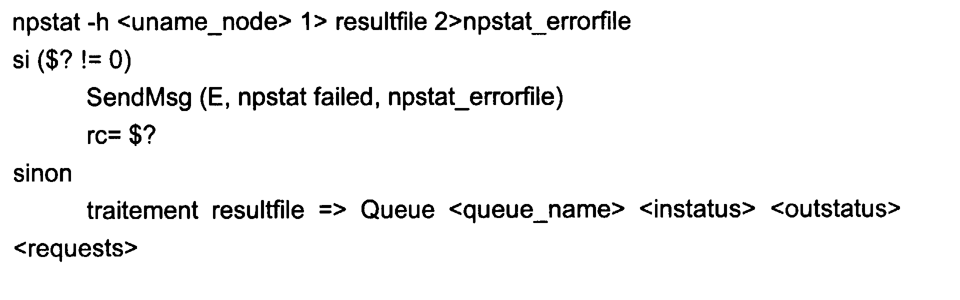 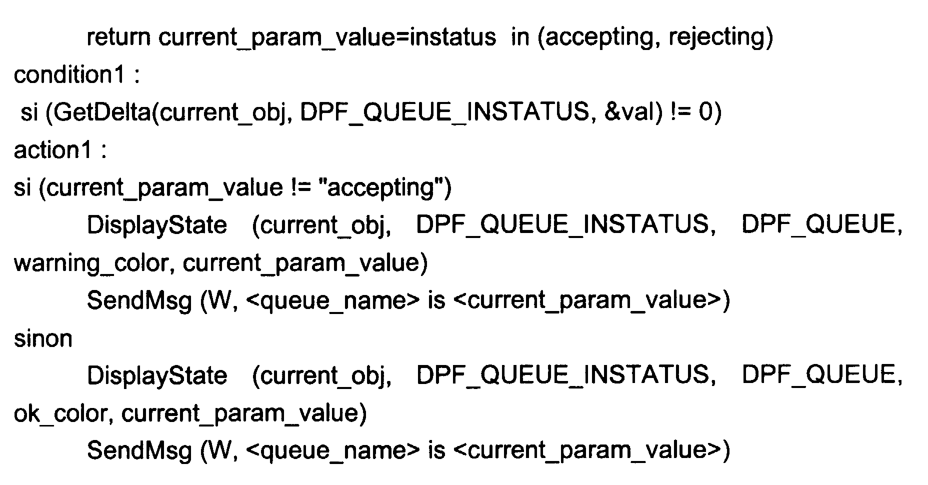
- paramètre DPF_QUEUE_OUTSTATUS
   mesure : 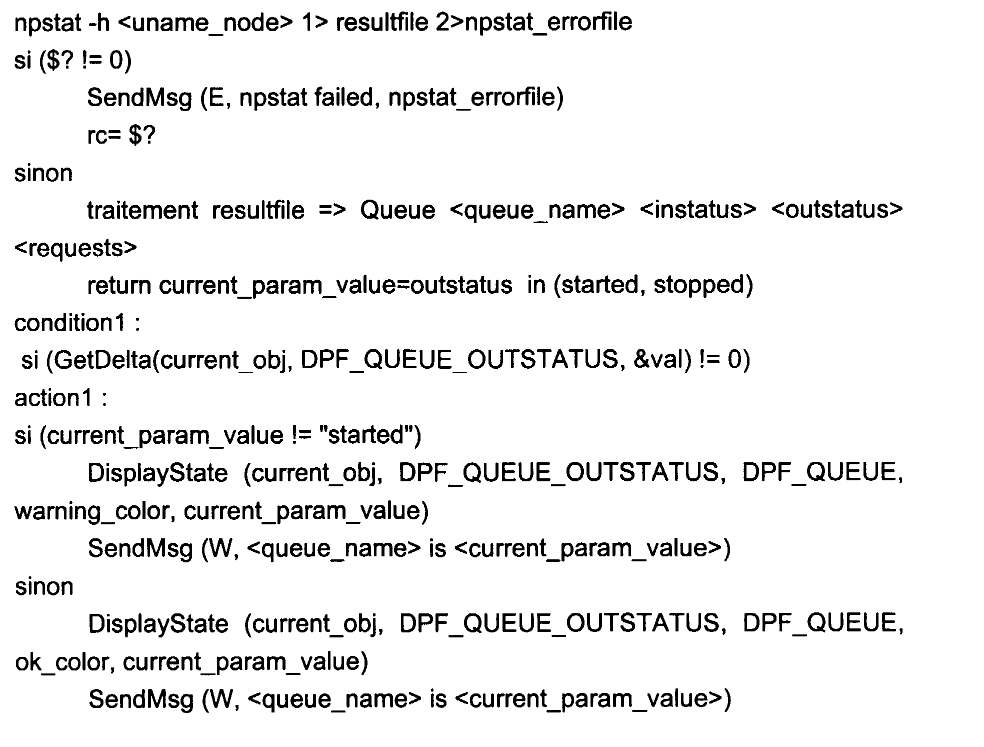
- paramètre DPF_QUEUE_REQUEST_STATUS
   mesure : 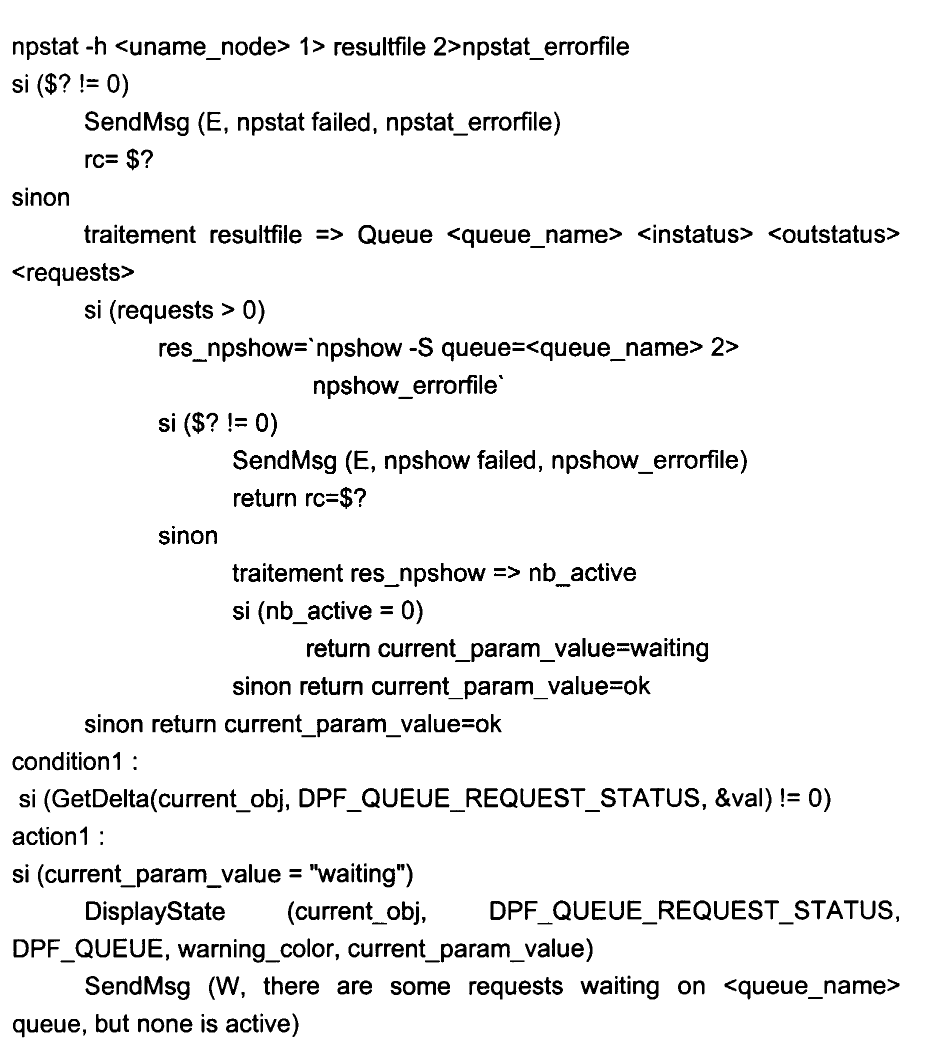
- paramètre DPF_DEVICE_STATUS
   mesure :

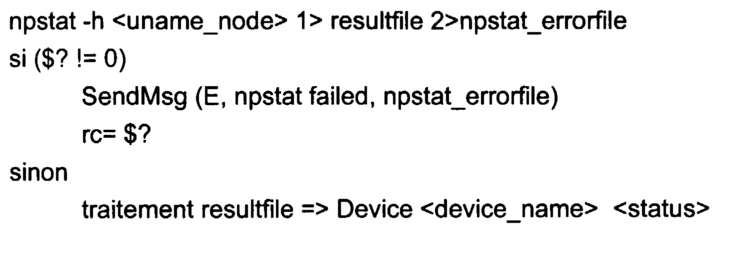

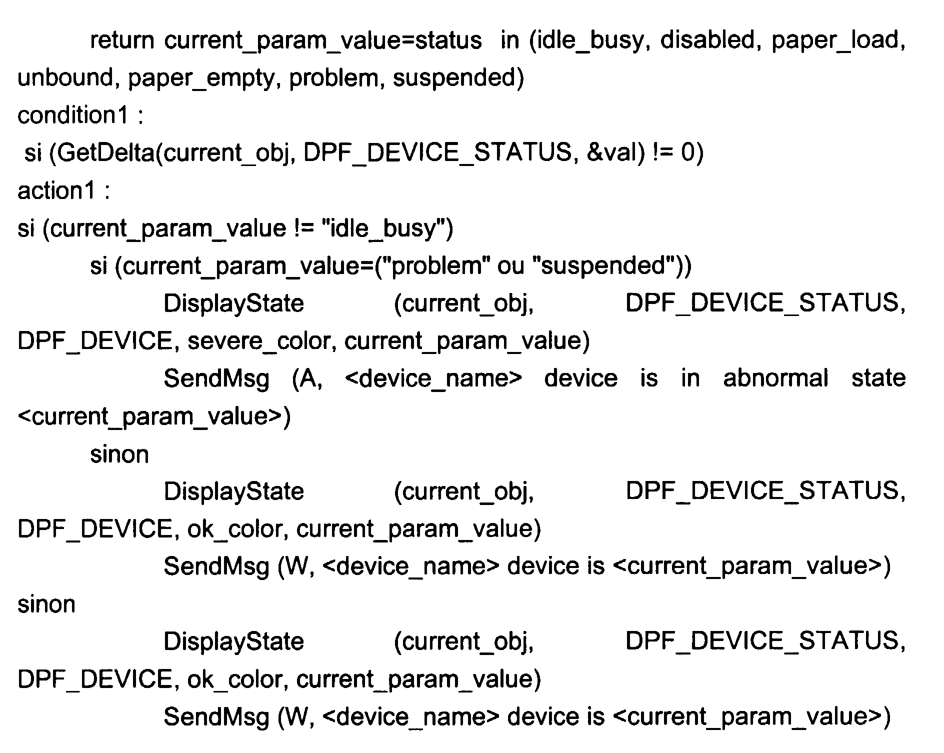

Egalement, relativement au module spécifique à Oracle, il doit être, entre autres, permis de contrôler l'accès aux objets pour prévenir tout bloquage ou suspension ("abort") de l'application si cette dernière désire accéder à la base ou aux objets Oracle. Certaines informations liées à l'espace ("extents", "free list", ...) sont également contrôlées. De plus la collecte de métriques Oracle est aussi autorisée. Les mesures ne sont effectuées que globalement et non sur un espace table ("tablespace") ou un processus particulier. Cela veut dire qu'il n'est pas possible de mesurer par exemple le nombre de blocs alloués pour l'espace table "SYSTEM". Cependant, l'utilisateur peut créer un paramètre et spécifier la commande à exécuter, comme par exemple,
CREATE_PARAM or716, ts_SYSTEM_blocks, MEASURE=(SPECIF_FILE,'x/y/z.sql'), [TRACE], PERIOD=12h, [CONDITION=((# > 320) ACTION=(UNIX_FILE , 'x/y'))];

Suit un exemple de mise en oeuvre du module spécifique à Oracle :
Relativement aux paramètres et conditions prédéfinies :
ORA_CONNECT : faire une connexion "<connect_string>". La valeur du paramètre est 0 (OK) ou 2 ("connect" impossible). Si la connexion est impossible, l'action par défaut est de relancer une fois la base. Choisir les mesures les plus utiles pour répondre aux objectifs du produit : prévention/détection de problèmes d'espace ou de performances, aide à estimer l'évolution de la Base dans le temps. Choix des ou parmi les mesures suivantes ("source DbaXpert" et "server manager").
- mesures sur l'activité du serveur:
   connected_user_count, session_count, waiting_session_count, current_open_cursors, logical_reads, physical_io, user_commits, recursive_calls.
- mesures sur les fichiers de données d'entrées/sorties :
   df_physical_reads, df_physical_writes, df_physical_block_reads, df_physical_block_writes.
- mesures sur la mise au point du cache ("cache_tuning") :
   logical_reads, ddc_gets, free_buffer_requested, ddc_getmisses, free_buffers_inspected, physical_reads, ddc_get_hitratio, buffer_cache_hitratio.
- mesures sur les transactions :
   active_transactions, rs_gets, rs_waits, redo_writes, redo_blocks_written, user_locks_count, user_rollbacks.
- mesures sur les états :
   cumulated_opened_cursor, parse_count, long_table_scans, short_table_scans, table_fetch_by_rowid, table_scan_rows_gotten, memory_sorts, disk_sorts.
- mesures sur les verrous ("latches") :
   latch_gets, latch_misses, latch_hitratio.
- mesures sur les processus :
   voir v$dispatcher, v$shared server, v$process.
- mesures sur les espaces table ("tablespaces") : voir "space monitor".
   ORA_ROW_CHAINING :

Pour chaque table, mesure du nombre de lignes d'enchaînement ("row chaining") puis test par rapport à un seuil, par défaut, l'agent remonte une alarme vers l'historique du produit. DbaXpert/space monitor est appelé et l'alarme TA0 est configurée avec -s ORA_TA0.sh (script à appeler si alarme, qui envoie une alarme vers l'historique du produit) et -d 0 (pas de remontée d'alarme vers DB*Control).
- si une condition explicite n'existe pas sur ce paramètre : faire "monitor table symptom=(TA0)",
- si une condition explicite avec "IGNORE" sur ce paramètre : ne rien faire,
- si une condition explicite existe sur ce paramètre, non combinée avec d'autres conditions : faire "monitor table symptom=(TA0, seuil [,hystérésis])",
- si une condition explicite existe sur ce paramètre, combinée avec d'autres conditions : faire "monitor table symptom=(TA0, seuil [,hystérésis])"
- accès aux objets :
   . param_ident=HEALTH. Accès aux bases (par SQL connect, la DB string user/passwd@dbstring dbc/dbc@T:or714 est fournie par l'utilisateur). Si la connexion est KO : action ORA_CONN_FAIL et enregistrement dans le fichier "actionlog".
   . teste que les bases de données ne sont pas démarrées en exclusif (par oubli du "DBA"). Le niveau d'alarme ("info", "warning", "critical") est défini par l'utilisateur. Action "ORA_EXC_MOUNT". Enregistrement dans "trace_params".
   . si "ARCHIVELOG", teste que le "process background arch" tourne sinon base de données bloquée dès que les fichiers "redo logs" sont pleins. Action "ORA_ARCH_STOP" et enregistrement dans "trace_params".
   . détecte et corrige les archives de fichiers "log" saturées. Correction par sauvegarde d'un nombre d'archives tel que un seuil d'espace libre est garanti dans le système de fichiers.
- surveille les "processes background", vérifie que l'instance oracle est stoppée normalement ("normal shutdown") si stoppée.
   . détecte si SQL*Net est tombé et assure la remise en route.
   . détecte si une instance (ses "processes background" et autres) est tombée et assure la remise en route.
- space mgt : il faut prévenir les situations de blocage possible et ne pas s'occuper d'optimiser les performances, ceci est traité par "DbaExpert".
   Les blocages peuvent arriver si une table (ou un index, "cluster"", "rollback sgt") a atteint son extention maximale ("MAXEXTENTS"), si la taille maximum d'un fragment est trop petite pour allouer le prochain "extent", si les fichiers de base de données ("dbfiles") sont pleins. Action dans ce cas.
   . Par "tablespace", taux de remplissage des dbfiles > seuil x ? Si oui, action "ORA_FREE_TS".
   . calcule la taille maximum des fragments. Si inférieure à la valeur du prochain "extent" alors action "ORA_MAX_FRG" et enregistrement dans le fichier "actionlog".
   . comparaison du nombre actuel "d'extents" avec le maximum permis "MAXEXTENTS" (défini à la création de l'objet, clause "STORAGE"). Dans ce cas, l'application utilisant la table sera suspendue ("abort"). Il faut prévenir cet incident. Action "ORA_MAX_EXT" si l'objet atteint son "maxextents". Enregistrement dans "actionlog".
- état des disques support des fichiers Oracle : une panne disque va se traduire par un return code Oracle (bloc corrompu) et seule l'application le récupère. Si détection, il faut au moins le signaler à l'administrateur. 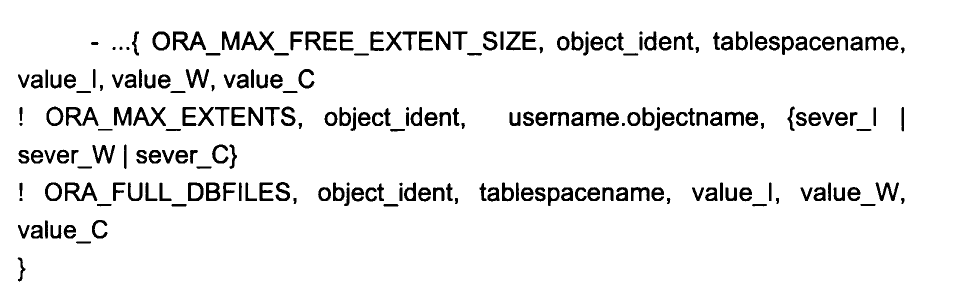
- nombre de transactions oracle par seconde, pour un noeud donné, pour une instance donnée : Affichage.
   Paramètre ora_tps, <object_ident>,
   command={SQL,'sql_tx'}, FREQUENCY=30
   DISPLAY={'nombre de TPS ora_simuload'};
   avec sql_tx : select gets/2 from v$latch where latch#=20.
   condition : si ce taux décroît fortement et que le nombre d'utilisateurs connectés ne décroît pas, alors déclencher une action qui pourrait être zoom plus détaillé de paramètres, enregistrement d'informations, sauvegarde de fichiers "trace", collecte plus fine, ...)
- nombre moyen de serveurs partagés oracle, pour un noeud donné, pour une instance donnée. Pas d'affichage.
   Paramètre ora_shared_srv, <object_ident>,
   command={SQL,'sql_srv S0'}, FREQUENCY=30;
   avec sql_srv : select count(*) from v$process where program like '%(S0%';
- nombre moyen d'utilisateurs oracle connectés , pour un noeud donné, pour une instance donnée. Pas d'affichage.
   Paramètre ora_sessions, <object_ident>,
   command={SQL,'sql_sessions'}, FREQUENCY=30;
   avec sql_sessions : select count(*) from v$session where status='ACTIVE' AND lockwait is not NULL;
- distributeur ("dispatcher") :

Si un distributeur est très occupé ("delta(v$dispatcher.busy)/delta(t) > 50%") et que le taux d'occupation cpu du noeud n'est pas trop grand (<80%), alors il faudrait ajouter un distributeur de même protocole (action automatique ou recommandation).

Si le temps d'attente/nombre de réponses ("v$queue.wait/v$queue.totalq") dans la queue de réponse du distributeur augmente régulièrement et que le taux d'occupation cpu du noeud n'est pas trop grand (<80%), alors il faudrait ajouter un distributeur de même protocole (action automatique ou recommandation ).

Quand oraSlDCurrentConnectedClients = oraSIDReservedConnections, alors les demandes de connexion distributeur vont vers des serveurs dédiés.

Surveiller le nombre de connexions (moyenne, courante) sur chaque distributeur et sur chaque serveur partagé.

Si oraDispatcherRejectedConnections augmente beaucoup, surveiller oraDispatcherState (BLOCKED, READY).

Si oraPrespawnedSrvRejectedConnections augmente beaucoup, surveiller oraPrespawnedState (BLOCKED, READY).

oraPrespawnedSrvProcessorlD est le process ID : faire le lien avec la consommation ressources système.
- entrées/sorties :
   si mauvaise répartition des entrées/sorties sur les commandes ("drives"), au niveau système : alors regarder la répartition des entrées/sorties par instance et sur les fichiers de base de données.
   De même, relativement au module spécifique à Tuxedo, il doit être, entre autres, permis de surveiller l'état des applications Tuxedo, des serveurs, des queues, du réseau en utilisant la commande "tmadmin psr, psc, pq, print_net". Pour Tuxedo, les serveurs administratifs ("BBL", "DBBL", "Bridge") et les applicatifs sont surveillés. L'accès aux differents noeuds de l'application Tuxedo (partitionnement du réseau) ainsi que les queues utilisées par l'application sont vérifiés. Si l'application appelle des transactions d'une machine déterminée, ladite machine déterminée est vérifiée.
   Suit un exemple de mise en oeuvre du module spécifique à Tuxedo :génération dans le fichier "objstate", via la fonction de base "DisplayState" :
   TUXEDO:<severity_level>:<appname>:NIL:<global_id>
   TUX_MASTER:<severity_level>:<node>:<appname>:<tux_father_id>
   [TUX_NODE:<severity_level>:<node>:<appname>:<tux_father_id>]...
   [TUX_QUEUE:<severity_level>:<qname>:<appname>:<tux_father_id>]...
   [TUX_DOMAIN:<severity_level>:<domain_name>:<appname>:<tux_father_id>]
      ...
   avec
   la ligne TUXEDO est générée en fonction des lignes filles TUX_MASTER,
   TUX_NODE ...
   TUX_NODE : une ligne par lmid autre que master.
   TUX_QUEUE : une ligne par QSPACE (tbc).
   TUX_DOMAIN : une ligne par domaine.
- paramètre TUX_xx_STATUS
   ...
- nombre de demandes de service (transactions) par seconde, pour un noeud donné, pour une application Tuxedo donnée : cumuler le #RqDone des serveurs autres que "BBL", "DBBL", "BRIDGE", "TMS*". Affichage.
   Paramètre SVC_<node>, <object_ident>,
   command={SHELL,'tmadmin_srv node'}, FREQUENCY=30
   DISPLAY={'nombre de TPS simuload'};;
   avec tmadmin_srv : tmadmin ...psr + filtre sur noeud + delta (#RqDone) par rapport à la dernière collecte, division par la fréquence.
- nombre moyen de clients actifs, pour un noeud donné, pour une application Tuxedo donnée. Pas d'affichage.
   Paramètre CLT_<node>, <object_ident>,
   command={SHELL,'tmadmin_dt node'}, FREQUENCY=30;
   avec tmadmin_clt:tmadmin...pclt + filtre sur noeud + nombre de lignes client occupées (BUSY).
- pour un serveur donné sur un noeud donné : le nombre moyen de requêtes en queue, par queue. Le faire pour tous les serveurs. Pas d'affichage. Permet de savoir si le nombre de serveurs dupliqués est adapté. Si la moyenne de requêtes en queue est > 10 ( exemple 10 est un peu plus grand que le nombre moyen de clients actifs demandeurs d'un service du serveur) alors action pour ajouter un serveur jusqu'à max).
   Paramètre SRVREQ_<srvname>_<node>, <object_ident>,
   command={SHELL,'tmadmin_srvreq node srvname'}, FREQUENCY=60
      CONDITION_S={&1 > 10};
   avec tmadmin_srvreq : tmadmin ...pq + filtre sur srvname + champ Queued. Cumuler le "Queued" sur les n serveurs sur le noeud, diviser par le nombre de queues.
   avec l'action :
   SRVREQ_<srvname>_<node> :
   si cpu <node> < 80% then tmboot -s <srvname> -i num
      (num calculé avec tmadmin psr pour connaître les srvid actuels).
- pour un serveur donné sur un noeud donné : le nombre moyen de serveurs applicatifs sur un noeud donné, pour une application Tuxedo donnée. Pas d'affichage. A corréler avec la taille de la queue.
   Paramètre SRVNB_<srvname>_<node>, <object_ident>,
   command={SHELL,'tmadmin_srvnb node srvname'}, FREQUENCY=60;
   avec tmadmin_srvnb:tmadmin...psr + filtre sur srvname.
- pour un service donné sur un noeud donné, pour une application Tuxedo donnée : le nombre de requêtes faites par quart d'heure. Le faire pour tous les services. Pas d'affichage. Pour mesurer l'utilisation des services.
   Paramètre SVCDREQ_<svcname>_<node>, <object_ident>,
   MEASURE={UNIX_FILE ,'tmadmin_svcdreq node svcname'}, PERIOD=900 ;
avec tmadmin_svcdreq : tmadmin ...psc + filtre sur svcname + delta (#Done) par rapport à la dernière collecte, division par la fréquence. Cumuler le #Done si le service est sur n serveurs sur le noeud.

L'administrateur Tuxedo affecte un poids aux services et il s'en sert pour l'équilibrage de charge. Ces poids ne sont pas forcément bien choisis, surtout dans le temps. On peut prévoirr que ces poids soient ajustés automatiquement en fonction de critères administrateur.

Aussi, relativement au module spécifique à "xcp2", il doit être, entre autres, permis d'utiliser la commande "/usr/xcp2/up/dac_lu62 -a DSPSESST" pour connaître l'état du groupe ("pool") "xcp2".

Enfin, relativement au module spécifique "système", il doit être, entre autres, permis de contrôler et mesurer le temps cpu, l'espace disque, les entrées/sorties, la mémoire, le débit télécom, le nombre d'utilisateurs, la pagination, le réseau, etc.. Il est ainsi par exemple possible de mesurer le taux d'occupation cpu par seconde, avec affichage par défaut, ou le taux d'entrées/sorties par seconde, ou encore d'identifier les processus les plus consommateurs de cpu et de les collecter pour réaliser une analyse autonome ("offline", tbc).

Pour conclure, suivant le présent procédé de surveillance, l'utilisation d'agents autonomes permet de s'assurer du bon fonctionnement des applications surveillées sur l'ensemble des noeuds à l'aide d'un traitement décisionnel autonome et efficace appliqué au plus près des objets à traiter, de faire remonter lorsque c'est nécessaire et ceci très rapidement, des noeuds à surveiller vers le noeud d'administration, les informations utiles et de lancer de manière automatique des actions sur certaines conditions ou de conseiller éventuellement une action. De cette manière, une surveillance efficace des objets fonctionnant sur la pluralité de noeuds est assurée et une augmentation significative des performanvces est obtenue du fait de la capacité d'indépendance offerte dans leur travail aux divers agents autonomes, le procédé ici appliqué permettant de mesurer des paramètres spécifiques de chaque objet, de tester des conditions sur ces paramètres relativement à des seuils puis d'exécuter une action pour prévenir d'un problème, pour reconfigurer ou corriger. Des mesures sont collectées pour réaliser une analyse en temps différé dans le but d'un examen statistique de l'activité surveillée. Ces mesures collectées concernent tous les types d'objets à surveiller, par exemple ici des instances telles que des bases de données comme Oracle, Informix, les applications comme Tuxedo, différentes ou une quelconque machine, l'impression distribuée (DPF), etc.. Egalement, l'aspect synthétique d'un objet global défini de manière générique, offre une très grande liberté d'action et autorise l'exploitation efficace de la notion d'arborescence avec une grande précision relativement à l'évolution des grains de visualisation obtenus. Des corrélations peuvent être réalisées entre plusieurs mesures différentes, en particulier, entre divers types d'objets, c'est-à-dire qu'une corrélation intertype est ainsi avantageusement proposée. Ce procédé est en outre portable sur différentes plate-formes, du fait de sa totale indépendance relativement à son environnement d'exécution, la visualisation se faisant au moyen d'une interface graphique propre audit procédé. Ce procédé est de plus prévu pour autoriser tout interfaçage avec un quelconque système d'administration pour offrir à l'utilisateur une administration intégrée, les agents autonomes accédant aux différentes informations à travers les protocoles standards existants.

## Revendications

1. Procédé de surveillance d'une pluralité de types d'objets sur une pluralité de noeuds comprenant un noeud d'administration dans un système informatique, caractérisé en ce que, la surveillance est configurée puis diffusée de manière filtrée à partir du noeud d'administration vers des agents autonomes, un agent autonome étant installé sur chaque noeud à surveiller pour, en offrant une corrélation intertype, soit traiter au plus près les différents types d'objets ou ensemble d'objets d'un domaine appelé objet global défini de manière générique, soit remonter des informations à visualiser vers l'interface graphique du noeud d'administration, chaque agent comportant une pluralité de modules spécifiques propres aux différents types d'objets ou à un domaine particulier, chaque module spécifique mesurant des paramètres statiques et dynamiques, particuliers au type d'objet qu'il surveille et collectant lesdites mesures, testant des conditions sur lesdits paramètres relativement à des seuils prédéfinis et déclenchant éventuellement des actions associées auxdites conditions testées, les paramètres, les conditions et les actions étant modifiables par l'utilisateur du noeud d'administration.

2. Procédé de surveillance selon la revendication 1, pour l'application duquel le noeud d'administration comporte entre autres, une interface graphique utilisateur pour la visualisation des objets sélectionnés et l'affichage de courbes de valeurs de paramètres, un fichier de configuration qui contient l'ensemble des configurations des objets avec la description desdits objets de même que l'ensemble des paramètres prédéfinis statiques ou dynamiques, ce fichier étant analysé et dynamiquement modifié ou complété, des fichiers d'état des noeuds à surveiller ainsi que les fichiers d'affichage des paramètres, les paramètres mesurés étant stockés dans un fichier d'analyse pour permettre leur affichage par l'intermédiaire de l'interface graphique.

3. Procédé de surveillance selon la revendication 1 ou 2, pour l'application duquel l'agent autonome installé sur chaque noeud à surveiller se compose principalement d'un agent générique en relation avec une pluralité de modules spécifiques chacun propre à un type d'objet ou à un domaine particulier, de fichiers contenant les fonctions de base utilisées, chaque noeud à surveiller possédant de plus ses propres fichiers de paramètres, de conditions et d'actions associées pour contrôler sa propre surveillance et ainsi autoriser le traitement au plus près des différents types d'objets en mesurant les paramètres, en évaluant les conditions et en lançant les actions liées aux conditions et ceci pour tous les objets décrits.

4. Procédé de surveillance selon les revendications 2 ou 3, pour l'application duquel, lorsqu'une condition non liée à un paramètre porte sur un ou plusieurs paramètres et donc sur un ou plusieurs objets, ladite condition est traitée sur le noeud d'administration par un agent générique qui traite les conditions sur plusieurs noeuds, cet agent générique "d'administration" lançant l'action sur le noeud d'administration.

5. Procédé de surveillance selon la revendication 4, pour lequel le traitement de l'agent générique "d'administration" se fait de la manière suivante:
- lecture de son fichier de configuration, analyse syntaxique et sémantique,
- fusion du fichier de configuration fourni par le noeud d'administration et du fichier de configuration fourni par les modules spécifiques,
- envoi du fichier de configuration résultant à chaque agent en filtrant relativement aux objets à surveiller sur le noeud et en tenant compte des problèmes inhérents aux noeuds en panne ou aux noeuds prévus pour la sauvegarde des données d'un noeud en panne sur un autre noeud.

6. Procédé de surveillance selon la revendication 5, pour lequel le traitement de l'agent générique d'un noeud à surveiller se fait de la manière suivante :
- lecture de son fichier de configuration, seuls les objets locaux à ce noeud étant traités,
- construction de la table d'objets,
- construction de la table de configuration des paramètres,
- construction de la table des valeurs de paramètres :
* chaque paramètre de chaque objet ayant au moins un emplacement pour mettre sa/ses valeur(s), le nombre d'emplacements à reserver pour ce paramètre de cet objet étant calculé,
- construction de la table des conditions multiples,
- fourniture des fonctions de base à l'usage des modules spécifiques pour certaines et pour les actions externes pour d'autres,
- lancement des modules spécifiques :
* certains modules spécifiques possédant un traitement propre, alors que d'autres sont regroupés dans un seul traitement,
* seuls les modules ayant un objet à surveiller étant lancés,
- configuration d'un service de surveillance de fichiers de manière à permettre le traitement de l'exploration des fichiers de journalisation de tous les objets décrits,
- évaluation de chaque condition multiple, avec sa période :
* chercher les valeurs des paramètres dans la table des valeurs de paramètres ou via une fonction de base,
* si la condition multiple est vérifiée, lancer l'action interne ou externe,
- surveillance régulière du bon fonctionnement des modules spécifiques, envoi d'un paramètre spécial et attente de la réponse.

7. Procédé de surveillance selon la revendication 6, pour lequel le traitement d'un module spécifique se fait de la manière suivante :
- exploration de la table de configuration des paramètres en ne traitant que ses propres objets :
* paramètres déjà triés par période croissante,
* pour chaque paramètre de chaque objet, selon la période :
. faire la mesure en utilisant la commande interne (paramètre prédéfini) ou externe, la mettre dans la table des valeurs de paramètres,
. si une analyse est effectuée, mettre la valeur dans le fichier d'analyse global de l'agent autonome,
. si un affichage est demandé, afficher la valeur ou l'état,
. évaluer la condition simple, si elle existe, lancer l'action (interne ou externe) si la condition est vraie,
- traitement des demandes inopinées de mesure en temps réel de paramètre.

8. Procédé de surveillance selon la revendication 7, dans lequel, lorsqu'une action, prédéfinie ou externe demande la valeur d'un paramètre d'un objet surveillé par un autre noeud que le noeud où est exécutée l'action, la fonction de base qui demande la valeur transfère cette demande au noeud d'administration qui la dirige alors sur le noeud adéquat alors que la valeur est retournée en sens inverse.

9. Procédé de surveillance selon la revendication 8, dans lequel, une des fonctions de base présentée est prévue pour ramener sur le noeud d'administration les fichiers de journalisation de paramètres ainsi que ceux d'actions de chaque noeud surveillé, pour l'analyse indépendante réalisée par le noeud d'administration.

10. Procédé de surveillance selon l'une des revendications précédentes, pour lequel le traitement d'un paramètre est effectué de la sorte :
- si le paramètre est validé et la période déterminée alors la mesure est exécutée,
- si une condition sur un paramètre existe et que le paramètre est validé, alors la condition est évaluée

11. Procédé de surveillance selon l'une des revendications précédentes, pour lequel le traitement des actions est réalisé comme suit :
- l'agent générique et les modules spécifiques demandent à lancer une action (prédéfinie ou fournie par l'extérieur),
- toute action reçoit des arguments qui représentent le contexte qui déclenche l'action :
. dans le cas d'une condition multiple, l'identifiant d'objet, l'identifiant du paramètre, le numéro de la condition,
. dans le cas d'une condition simple, la valeur mesurée du paramètre, son seuil et son hystérésis, l'opérateur.
